# EUROPEAN PATENT APPLICATION

(11) **EP 4 811 922 A1**
(43) Date of publication of application: **23.09.2026**
(21) Application number: 24896613.7
(22) Date of filing: 27.11.2024
(51) Int. Cl.: H04W 76/00

(54) **COMMUNICATION METHOD AND COMMUNICATION APPARATUS**

(30) Priority: 01.12.2023 CN 202311642994
(71) Applicant: Huawei Technologies Co., Ltd., Shenzhen, Guangdong 518129 (CN)
(72) Inventor: HU, Yajie, Shenzhen, Guangdong 518129 (CN); YING, Jiangwei, Shenzhen, Guangdong 518129 (CN)
(74) Representative: Gill Jennings & Every LLP
(86) International application number: PCT/CN2024/135066
(87) International publication number: WO 2025/113527

(57) **Abstract**

This application provides a communication method and a communication apparatus. The communication method includes: receiving a first request sent by an AF, where the first request is used to request a sensing result of a first sensing service; determining a first sensing function, where the first sensing function is determined based on the first sensing service and capability information of at least one sensing function, the capability information of the sensing function includes a sensing service corresponding to the sensing function, and a sensing service corresponding to the first sensing function includes the first sensing service; and sending a second request to the first sensing function, where the second request is used to request a sensing result of the first sensing service.

## Description

This application claims priority to Chinese Patent Application No. 202311642994.2, filed with the China National Intellectual Property Administration on December 1, 2023 and entitled "COMMUNICATION METHOD AND COMMUNICATION APPARATUS", which is incorporated herein by reference in its entirety.

### TECHNICAL FIELD

Embodiments of this application relate to the communication field, and in particular, to a communication method and a communication apparatus.

### BACKGROUND

With continuous development of communication technologies, requirements for a communication system having a sensing capability are gradually emerging. For example, in some scenarios of a smart city and smart transportation, a requirement for obtaining sensing data such as a relative position between objects and a speed and a shape of an object gradually emerges.

For a communication system having a sensing capability, how to obtain more reliable and accurate sensing data becomes a technical problem to be urgently resolved.

### SUMMARY

This application provides a communication method, to obtain more reliable and accurate sensing data or sensing results.

According to a first aspect, this application provides a communication method, applied to a network exposure function, including: receiving a first request from an application function, where the first request is used to request a sensing result of a first sensing service; and determining a first sensing function, where the first sensing function is determined based on the first sensing service and capability information of at least one sensing function, the capability information of the sensing function includes a sensing service corresponding to the sensing function, and a sensing service corresponding to the first sensing function includes the first sensing service; and sending a second request to the first sensing function, where the second request is used to request a sensing result of the first sensing service.

For example, the network exposure function may also be referred to as an NEF (network exposure function), the application function may also be referred to as an AF (application function), and the sensing function may also be referred to as an SF (sensing function). The following describes the NEF, the AF, and the SF. However, it should be understood that the description does not constitute a limitation on this application.

In the communication method, after the NEF receives the first request, the NEF first determines the first SF that can provide the sensing result of the first sensing service.

In this embodiment of this application, when the first SF is determined, the first SF is determined based on the first sensing service and the capability information of the at least one SF. The capability information of the SF includes the sensing service corresponding to the SF.

Alternatively, in other words, in this embodiment, the first SF is determined based on the requested first sensing service and the sensing service corresponding to the at least one SF.

Alternatively, in other words, the first SF is determined based on the requested first sensing service and a correspondence between the SF and the sensing service.

It should be noted herein that how to configure the correspondence between the SF and the sensing service is not limited in this embodiment. For example, an identifier of the at least one SF and an identifier of a sensing service corresponding to each SF identifier may be configured, to indicate the sensing service corresponding to each SF. For another example, a service identifier including at least one sensing service and at least one SF identifier corresponding to an identifier of each sensing service may be configured, to indicate a correspondence between a sensing function and a sensing service. Optionally, the identifier of the SF may also be replaced with address information of the SF.

It should be noted herein that a specific implementation of determining the first sensing function based on the first sensing service and the capability information of the at least one sensing function is not limited in this application.

In an implementation solution, a correspondence between the SF and the sensing service may be configured in the NRF, that is, the NRF learns of capability information of each SF. Specifically, when the correspondence between the SF and the sensing service is configured in the NRF,
a method for determining the first SF includes: The NEF sends first discovery information to the NRF, where the first discovery information is used to request information about a sensing function; and receiving first response information from the NRF, where the first response information indicates the capability information of the at least one SF.

For example, a network storage function is an NRF (network repository function). The following uses the NRF for description. It may also be understood that the description does not constitute a limitation.

In this implementation, after the NEF receives the first request, the NEF sends the first discovery information to the NRF, where the first discovery information is used to request the NRF to feed back information about the SF. After receiving the first discovery information, the NRF indicates the capability information of the at least one SF to the NEF based on the first response information, that is, indicates, to the NEF, the sensing service corresponding to the at least one SF. Correspondingly, the NEF determines, as the first SF based on the sensing service that corresponds to the at least one SF and that is indicated by the NRF, an SF whose corresponding sensing service is the first sensing service.

In some embodiments, when the NEF sends the first discovery information to the NRF, the first discovery information may further include information indicating a first sensing region requested by the AF. In this case, the first discovery information may also be considered as information requesting the NRF to feed back an SF corresponding to the first sensing region. Correspondingly, when the NRF indicates, to the NEF based on the first response information, the capability information of the at least one SF, the NRF may indicate only capability information of the SF corresponding to the first sensing region. Further, after receiving the first response information, the NEF determines, as the first SF, the SF corresponding to the first sensing service.

In some embodiments, when the NRF indicates the capability information of the at least one SF to the NEF based on the first response information, the first response information further includes the identifier of the SF.

Specifically, when the correspondence between the SF and the sensing service is configured in the NRF, another method for determining the first SF includes: The NEF sends second discovery information to the NRF, where the second discovery information is used to request to discover an SF, and the second discovery information includes information indicating the first sensing service. That is, the second discovery information may be considered as information used to request the NRF to feed back the first SF corresponding to the first sensing service. Correspondingly, after receiving the second discovery information, the NRF determines, based on a sensing service corresponding to each SF and the requested first sensing service, the SF (namely, the first SF) corresponding to the first sensing service, and then sends second response information to the NEF, where the second response information indicates the first SF.

In other words, in this implementation, the NEF includes the information about the first sensing service in a message that is sent to the NRF and that is used to request the NRF to discover the SF, so that the NRF determines the first SF corresponding to the first sensing service, and then the NRF indicates the determined first SF to the NEF.

In some embodiments, the capability information of the SF further includes a type of a sensing result and a corresponding sensing application programming interface (application programming interface, API) that the SF can provide. One sensing service may correspond to one or more sensing APIs.

For example, when indicating the capability information of the at least one SF to the NEF, the NRF further indicates a type of sensing data and a corresponding sensing API that each of the at least one SF can provide.

In this embodiment, after the first SF is determined, the NEF may send a second request to the first SF to request the sensing result of the first sensing service. Correspondingly, the first SF obtains the sensing result of the first sensing service from a corresponding sensing device (for example, a sensing base station).

In an example, after receiving the second request, the first SF sends the sensing result of the first sensing service to the NEF, so that the NEF learns of the sensing result of the first sensing service, and sends the sensing result to the AF.

It can be learned that, in the communication method provided in this embodiment, when receiving the request that is sent by the AF and that is used to request the sensing result of the first sensing service, the NEF determines, based on the correspondence between the SF and the sensing service, the first SF corresponding to the first sensing service. It should be understood that the first SF may provide the sensing result of the first sensing service.

In addition, in this manner, when the first sensing service corresponds to a plurality of SFs, in this case, by using the method in this application, the plurality of SFs may be determined, and then sensing results of the first sensing service are separately requested from the plurality of SFs, thereby implementing accuracy of the fed-back sensing result of the first sensing service.

With reference to the first aspect, in a possible implementation, the first request further includes the information indicating the first sensing region requested by the application function, for example, includes an identifier of the first sensing region; and the capability information of the sensing function further includes the sensing region corresponding to the sensing function.

When the first request further includes the information indicating the first sensing region requested by the application function, it may be considered that the first request is used to request to sense the first sensing region.

In this implementation, when the first request further includes the information indicating the first sensing region requested by the AF, after receiving the first request sent by the AF, the NEF determines the first SF based on the first sensing service, the first sensing region, and the sensing service and a sensing region that correspond to the at least one sensing function. It should be understood that the determined first SF is an SF corresponding to the first sensing service and the first sensing region.

With reference to the first aspect, in a possible implementation, the method further includes: determining a second SF, where the second SF is determined based on the first sensing service and capability information of at least one SF, and a sensing service corresponding to the second SF includes the first sensing service; and sending a third request to the second SF, where the third request is used to request the sensing result of the first sensing service.

In this implementation, for the first sensing service, in addition to the first SF that can provide the sensing result of the first sensing service, the second SF can also provide the sensing result of the first sensing service.

In this embodiment of this application, when the AF requests the sensing result of the first sensing service, if the SF determined by the NEF includes the second SF in addition to the first SF, in this case, when sending the second request to the first SF to request the sensing result, the NEF may further include an identifier of the second SF in the second request. Optionally, the identifier of the second SF may be replaced with other information, provided that the other information can be used to uniquely identify the second SF.

More specifically, if the NEF determines that the first SF is a network element fusing a plurality of sensing results, the identifier of the second SF in the second request indicates to perform fusion based on the sensing result in the second SF.

For ease of description, in this embodiment of this application, the sensing result in the first SF is referred to as a first sensing result, and the sensing result in the second SF is referred to as a second sensing result.

Optionally, if the NEF determines that the first SF is a network element fusing a plurality of sensing results, the NEF may further include, in the second request, indication information indicating that the first SF is the network element fusing the plurality of sensing results. For example, the indication information indicating that the first SF is the network element fusing the plurality of sensing results is 1 information bit. When the information bit is 1, it indicates that the first sensing function is the network element fusing the plurality of sensing results.

Further, in this embodiment, after obtaining the second sensing result from the second SF, the first SF performs fusion processing based on the first sensing result and the second sensing result, to obtain a target sensing result, and then sends the target sensing result to the NEF. Optionally, the first SF may not perform fusion processing on the first sensing result and the second sensing result. In this case, the target sensing result includes the first sensing result and the second sensing result.

More specifically, if the NEF determines that the second SF is the network element fusing the plurality of sensing results, the identifier of the second SF in the second request indicates that the second SF is the network element fusing the plurality of sensing results. It may be understood that, in this implementation, the second request may be considered as requesting the first SF to send the first sensing result to the second SF. Further, in this embodiment, after the first SF sends the first sensing result to the second SF, the second SF obtains the target sensing result based on the first sensing result and the second sensing result, and indicates the target sensing result to the NEF.

In this manner, sensing results of the first sensing service that need to be obtained from the first SF and the second SF are all aggregated (also referred to as fused) at the SF, then the SF that performs fusion sends the obtained target sensing result to the NEF, and finally, the NEF sends the target sensing result to the AF, which is also referred to as being exposed to the AF.

With reference to the first aspect, in a possible implementation, the first request is further used to request the sensing result of the second sensing service, and the method further includes: determining, based on the second sensing service and the capability information of the at least one sensing function, an SF corresponding to the second sensing service, and requesting the sensing result of the second sensing service from the SF corresponding to the second sensing service. In this implementation, when requesting the sensing result, the first request is used to request both the sensing result of the first sensing service and the sensing result of the second sensing service.

A manner in which the NEF determines the SF corresponding to the second sensing service may be similar to an implementation in which the NEF determines the first SF. Details are not described herein again.

According to a second aspect, this application provides a communication method, applied to an NEF, including: receiving a fourth request from an application function, where the fourth request is used to request a sensing result, and the fourth request includes information indicating a requested sensing region; and determining a first sensing function and a second sensing function, where the first sensing function and the second sensing function are determined based on the requested sensing region and information about sensing regions corresponding to a plurality of sensing functions, and a sensing region corresponding to the first sensing function and a sensing region corresponding to the second sensing function cover the requested sensing region; sending a fifth request to the first sensing function, where the fifth request is used to request a sensing result; and sending a sixth request to the second sensing function, where the sixth request is used to request a sensing result, and the fifth request includes identifier information of the second sensing function.

The fourth request is used to request the sensing result, and the fourth request includes information indicating a requested sensing region. For example, the fourth request includes a region identifier of the requested sensing region.

In this embodiment, after receiving the fourth request sent by the AF and determining the first SF and the second SF, the NEF further includes the identifier information of the second SF in the fifth request when sending the fifth request to the first SF.

Specifically, in some embodiments, when the NEF determines that the first SF is a network element fusing a plurality of sensing results, an identifier of the second SF in the fifth request indicates to perform fusion based on the sensing result in the second SF.

For ease of description, in this embodiment, the sensing result in the first SF is referred to as a first sensing result, and the sensing result in the second SF is referred to as a second sensing result. Optionally, in this case, the NEF may further include, in the fifth request, indication information indicating that the first SF is the network element fusing the plurality of sensing results. For example, the indication information indicating that the first SF is the network element fusing the plurality of sensing results is 1 information bit. When the information bit is 1, it indicates that the first SF is the network element fusing the plurality of sensing results.

Further, in this embodiment, after obtaining the second sensing result from the second SF, the first SF may obtain a target sensing result based on the first sensing result and the second sensing result, and then send the target sensing result to the NEF.

Specifically, in some embodiments, when the NEF determines that the second SF is a network element fusing a plurality of sensing results, the identifier of the second SF in the fifth request indicates that the second SF is the network element fusing the plurality of sensing results.

It may be understood that in this implementation, the fifth request may also be considered as being used to request the first SF to send the first sensing result to the second SF. Further, in this embodiment, after the first SF sends the first sensing result to the second SF, the second SF indicates the first sensing result and the second sensing result to the NEF. Optionally, the second SF may perform fusion processing on the first sensing result and the second sensing result to obtain the target sensing result, and then send the target sensing result to the NEF.

With reference to the second aspect, in a possible implementation, the fourth request further includes information indicating a requested sensing service, the first sensing function and the second sensing function are determined based on the requested sensing region, the requested sensing service, a sensing region corresponding to at least one sensing function, and a sensing service corresponding to at least one sensing function, and both a sensing service corresponding to the first sensing function and a sensing service corresponding to the second sensing function include the first sensing service.

According to a third aspect, this application provides a communication method, applied to a first SF, including: receiving a request message used to request a sensing result, where the request message includes first information, and the first information indicates an identifier of a second sensing function; or the second request is from a second sensing function; obtaining the sensing result in response to the request message; and sending the sensing result to the second sensing function.

With reference to the third aspect, in a possible implementation, sending the sensing result to the second sensing function includes: obtaining the sensing result from a first access network device and sending the sensing result to the second sensing function.

With reference to the third aspect, in a possible implementation, the first information further indicates a sensing region corresponding to the second sensing function, and the method further includes: when a sensing target moves from a sensing region corresponding to the first sensing function to the sensing region corresponding to the second sensing function, sending the sensing result to the second sensing function.

According to a fourth aspect, this application provides a communication method, applied to a second SF, including: receiving a first sensing result from a first sensing function; receiving a second sensing result from an access network device; and sending a target sensing result to a sensing result requester, where the target sensing result is obtained based on the first sensing result and the second sensing result.

With reference to the fourth aspect, in a possible implementation, before receiving the first sensing result from the first sensing function, the method further includes: requesting the first sensing function to send the sensing result.

With reference to the fourth aspect, in a possible implementation, the method further includes: receiving indication information that is sent by a network exposure function and that indicates that the second sensing function is a network element fusing a plurality of sensing results.

According to a fifth aspect, this application further provides a communication method, including: When a sensing target moves from a sensing region corresponding to a first SF to a target sensing region, a first SF sends request information to an NRF, where the request information includes indication information indicating the target sensing region; the NRF indicates, to an NEF, a second SF corresponding to the target sensing region; and the first SF sends a sensing result to the second SF, or the first SF requests the second SF to send a sensing result.

Further, after the first SF sends the sensing result to the second SF, the second SF performs fusion based on the sensing result sent by the first SF and the sensing result in the second SF, to obtain a target sensing result, and sends the target sensing result to the NEF. Further, the NEF sends the target sensing result to an AF. Alternatively, after the first SF requests the second SF to send the sensing result, the first SF performs fusion based on the sensing result sent by the second SF and the sensing result in the first SF, to obtain the target sensing result, and sends the target sensing result to the NEF. Further, the NEF sends the target sensing result to the AF.

According to a sixth aspect, this application provides a communication apparatus, including a memory, configured to perform the method according to the first aspect or any one of the possible implementations of the first aspect.

With reference to the sixth aspect, in a possible implementation, the communication apparatus further includes a processor, the memory is configured to store program instructions, and the processor is configured to invoke the program instructions in the memory to perform the method according to the first aspect or any one of the possible implementations of the first aspect.

According to a seventh aspect, this application provides a communication apparatus, including a memory, configured to perform the method according to the second aspect or any one of the possible implementations of the second aspect.

With reference to the seventh aspect, in a possible implementation, the communication apparatus further includes a processor, the memory is configured to store program instructions, and the processor is configured to invoke the program instructions in the memory to perform the method according to the second aspect or any one of the possible implementations of the second aspect.

According to an eighth aspect, this application provides a communication apparatus, including a memory, configured to perform the method according to the third aspect or any one of the possible implementations of the third aspect.

With reference to the eighth aspect, in a possible implementation, the communication apparatus further includes a processor, the memory is configured to store program instructions, and the processor is configured to invoke the program instructions in the memory to perform the method according to the third aspect or any one of the possible implementations of the third aspect.

According to a ninth aspect, this application provides a communication apparatus, including a memory, configured to perform the method according to the fourth aspect or any one of the possible implementations of the fourth aspect.

With reference to the ninth aspect, in a possible implementation, the communication apparatus further includes a processor, the memory is configured to store program instructions, and the processor is configured to invoke the program instructions in the memory to perform the method according to the fourth aspect or any one of the possible implementations of the fourth aspect.

According to a tenth aspect, this application provides a communication apparatus, including a memory, configured to perform the method according to the fifth aspect or any one of the possible implementations of the fifth aspect.

With reference to the tenth aspect, in a possible implementation, the communication apparatus further includes a processor, the memory is configured to store program instructions, and the processor is configured to invoke the program instructions in the memory to perform the method according to the fifth aspect or any one of the possible implementations of the fifth aspect.

According to an eleventh aspect, this application provides a communication system, including the communication apparatus according to the sixth aspect, and/or the communication apparatus according to the seventh aspect, and/or the communication apparatus according to the eighth aspect, and/or the communication apparatus according to the ninth aspect.

According to a twelfth aspect, this application provides a computer-readable medium, where the computer-readable medium stores program code to be executed by a computer, and the program code includes instructions used for performing the method according to any one of the first aspect to the fourth aspect or any possible implementation of the first aspect to the fourth aspect.

According to a thirteenth aspect, this application provides a chip system, including at least one processor and a communication interface. The communication interface and the at least one processor are interconnected through a line, and the at least one processor is configured to run a computer program or instructions, to perform the method according to any one of the first aspect to the fourth aspect or any possible implementation of the first aspect to the fourth aspect.

According to a fourteenth aspect, this application provides a computer program product. The computer program product includes computer program code, and when the computer program code is run on a computer, the computer is enabled to implement the method according to any one of the first aspect and the second aspect or any possible implementation of the first aspect and the second aspect.

For technical effect brought by any implementation of the second aspect to the fourteenth aspect, refer to technical effect brought by the first aspect and any possible implementation of the first aspect. Details are not described again.

### BRIEF DESCRIPTION OF DRAWINGS

FIG. 1 is a diagram of implementing wireless sensing according to this application;
FIG. 2 is a diagram of a communication system according to this application;
FIG. 3 is a diagram of another communication system according to this application;
FIG. 4 is a diagram of a scenario in which sensing data requested by an AF is from a plurality of SFs according to this application;
FIG. 5 is a diagram of another scenario in which sensing data requested by an AF is from a plurality of SFs according to this application;
FIG. 6 is a diagram of still another scenario in which sensing data requested by an AF is from a plurality of SFs according to this application;
FIG. 7 is a schematic flowchart of a communication method according to an embodiment of this application;
FIG. 8 is a schematic flowchart of a communication method according to another embodiment of this application;
FIG. 9 is a schematic flowchart of a communication method according to another embodiment of this application;
FIG. 10 is a schematic flowchart of a communication method according to another embodiment of this application;
FIG. 11A and FIG. 11B are a schematic flowchart of a communication method according to another embodiment of this application;
FIG. 12A and FIG. 12B are a schematic flowchart of a communication method according to another embodiment of this application;
FIG. 13 is a diagram of a structure of a communication system according to an embodiment of this application; and
FIG. 14 is a diagram of a structure of a communication system according to another embodiment of this application.

### DESCRIPTION OF EMBODIMENTS

Existing wireless signals (such as sound, light, and radio frequency signals) in an environment may be "additionally" used to sense the environment while completing their primary tasks (such as illumination and communication). A radio frequency signal is used as an example. A radio wave generated by a signal transmitter may have physical phenomena such as direct propagation, reflection, and scattering in a propagation process. In this way, a signal formed at a signal receiver carries information reflecting signal propagation space. For example, if a wireless connection signal received by a mobile phone is weak, a possible cause is that the mobile phone is far away from a wireless router. If strength of a Wi-Fi signal received by a mobile phone decreases sharply, a possible cause is that the mobile phone enters specific closed space, such as an elevator.

Therefore, scenario sensing may be implemented by analyzing a change of a radio signal in a propagation process. This technology is also referred to as a wireless sensing technology or a non-sensor scenario sensing technology.

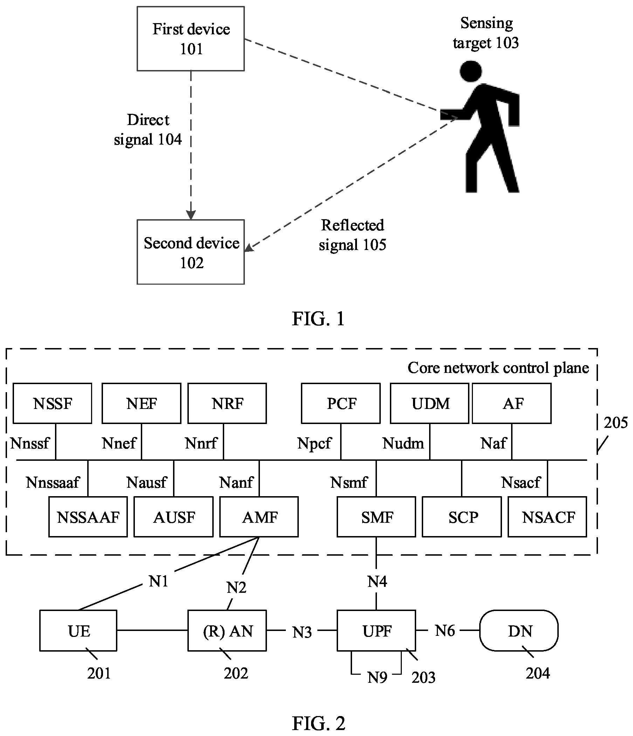

For ease of understanding, FIG. 1 is an example of a diagram of implementing wireless sensing. As shown in FIG. 1, a wireless sensing system includes a first device 101 and a second device 102, and a signal received by the second device 102 is a signal obtained by superposing a direct signal 104 and a reflected signal 105 reflected by a sensing target 103. When the sensing target 103 moves, the reflected signal 105 changes. In this way, the signal received by the second device 102 also changes accordingly. Therefore, a status of the sensing target 103 may be learned based on the change of the signal received by the second device 102.

In some embodiments, the wireless sensing technology may be radar-based sensing. A radar includes a transmit antenna and a receive antenna. The transmit antenna sends electromagnetic waves, and the electromagnetic waves are reflected when reaching a target, and the reflected waves are received by the receive antenna. A radar system analyzes feature information of the target, for example, a position, a shape, a motion feature, and a motion track, through signal processing based on a change of a received wave. Radar sensing has many unique advantages: (1): The radar is not affected by lighting conditions, and has a capability of penetrating obstacles, so that personal privacy can be better protected. (2): The radar has a farther sensing range, and does not cause harm to people or animals. (3): For motion detection, Doppler effect of a target echo is used to observe and interpret a motion status of the target, like a motion direction and a motion speed. When using multi-channel radar sensors, the motion of the target can alternatively be observed from different angles. By collecting the motion status of the target from different angles and analyzing instantaneous information and historical information, complex motion can be distinguished.

Currently, the wireless sensing technology may be applied to different scenarios. For example, in a sports scenario, this technology may be used to detect a motion status and a motion route of a person and a ball. In a home environment scenario, human body fall detection may be further performed to prevent an elderly person from falling, and a human body motion status and a route are interpreted by processing channel state information (channel state information, CSI). In a field of vehicle assisted driving, this technology may be used to detect a pedestrian and a vehicle ahead to implement anti-collision warning. In a specific industrial park scenario, this technology can be used to monitor intrusion of flying objects such as unmanned aerial vehicles. In a traffic scenario, this technology can be used to implement functions such as traffic flow statistics and vehicle navigation.

With development of a 5G network, a requirement for a communication system having a sensing capability is gradually emerging. For example, in some scenarios of a smart city and smart transportation, a requirement for obtaining sensing data such as a relative position between objects and a speed and a shape of an object gradually emerges. The sensing data may be understood as data indicating a sensing result.

It should be noted herein that an architecture of a communication system that needs to have a sensing capability is not specifically limited in embodiments of this application. In other words, the solutions in embodiments of this application may be further applicable to a future communication system such as 6G.

For example, the architecture may be a service-oriented architecture-based system architecture (also referred to as a network architecture) shown in FIG. 2. As shown in FIG. 2, the network architecture includes user equipment (user equipment, UE) 201, an access network (access network, AN) or a radio access network (radio access network, RAN) 202, a core network (core network, CN) data plane user plane function (user plane function, UPF) 203, a data network (data network, DN) 204, and a core network control plane 205.

The UE 201 a device that provides a user with voice and/or data connectivity, for example, a handheld device or a vehicle-mounted device having a wireless connection function. The UE may also be referred to as a terminal device, an access terminal (access terminal), a user unit (user unit), a user station (user station), a mobile station (mobile station), a mobile console (mobile console), a remote station (remote station), a remote terminal (remote terminal), mobile equipment (mobile equipment), a user terminal (user terminal), wireless telecom equipment (wireless telecom equipment), a user agent (user agent), user equipment (user equipment), or a user apparatus. The UE may be a station (station, STA) in a wireless local area network (wireless local area network, WLAN), or may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a compute device or another processing device connected to a wireless modem, a vehicle-mounted device, a wearable device, a terminal in a next-generation communication system (for example, a fifth generation (fifth generation, 5G) communication network), a terminal device in a future evolved public land mobile network (public land mobile network, PLMN), or the like. 5G may also be referred to as new radio (new radio, NR). In a possible application scenario of this application, the terminal device may alternatively be a terminal device that often operates on land, for example, a vehicle-mounted device. In this application, for ease of description, a chip deployed in the foregoing device, or a chip may also be referred to as a terminal device.

A main function of the (R)AN 202 is to control the UE 201 to wirelessly access a mobile communication network. The AN 202 is a part of the mobile communication system, and implements a wireless access technology. For example, the AN 202 may be, for example, any device having a wireless transceiver function. The device includes but is not limited to: a base station (base station), an evolved NodeB (evolved NodeB, eNB or eNodeB), a radio network controller (radio network controller, RNC), a NodeB (NodeB, NB), a base station controller (base station controller, BSC), a base transceiver station (base transceiver station, BTS), a home NodeB (for example, home evolved NodeB, or home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and a reception point (transmission and reception point, TRP), or the like, or may be a gNB in a 5G system, for example, NR, a transmission point (TRP or TP), or an antenna panel or a group of antenna panels (including a plurality of antenna panels) of a base station in a 5G system, or may be a network node that constitutes a gNB or transmission point, for example, a baseband unit (BBU) or a distributed unit (DU), or may be a next-generation base station in a 6th generation (6th generation, 6G) mobile communication system, a base station in a future mobile communication system, or an access node in a Wi-Fi system, or may be a module or a unit that performs a part of functions of the base station, for example, a central unit (central unit, CU) or a distributed unit (distributed unit, DU).

In some deployments, a gNB may include a central unit (central unit, CU) and a DU. The gNB may further include a radio frequency unit (radio unit, RU). The CU implements a part of functions of the gNB, and the DU implements a part of functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the physical layer, or is converted from information at the physical layer. Therefore, in this architecture, higher layer signaling, for example, RRC layer signaling, may also be considered as being sent by the DU or by the DU and the CU. It may be understood that the network device may be a CU node, a DU node, or a device including a CU node and a DU node. In addition, the CU may be classified into a network device in an access network (radio access network, RAN), or the CU may be classified into a network device in a core network (core network, CN). This is not limited in this application.

The UE 201 and the (R)AN 202 may be deployed on land, including indoor, outdoor, handheld, or vehicle-mounted deployment, may be deployed on a water surface, or may be deployed on an airplane, a balloon, or an artificial satellite in the air. Application scenarios of the AN 202 and the UE 201 are not limited in embodiments of this application.

The UE 201 and the (R)AN 202 may communicate with each other by using a licensed spectrum, may communicate with each other by using an unlicensed spectrum, or may communicate with each other by using both a licensed spectrum and an unlicensed spectrum; or may communicate with each other by using a spectrum below 6 gigahertz (gigahertz, GHz), may communicate with each other by using a spectrum above 6 GHz, or may communicate with each other by using a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. A control subsystem that includes a base station function herein may be a control center in an application scenario of the foregoing terminal, such as a smart grid, industrial control, smart transportation, and a smart city. The function of the terminal may alternatively be performed by a module (for example, a chip or a modem) in the terminal, or may be performed by an apparatus including the function of the terminal.

The UPF 203 is a functional unit of a user plane, and is mainly responsible for packet data forwarding, quality of service (quality of service, QoS) control, charging information statistics, a connection to an external network, and the like. The UPF 203 includes related functions of a serving gateway (serving gateway, SGW) and a public data network gateway (public data network gateway, PDN-GW) of a long term evolution (long term evolution, LTE) technology.

The DN 204 is a network responsible for providing a service for the UE 201. For example, some DNs provide an internet access function for the UE 201, and some other DNs provide a messaging function for the UE 201.

The core network control plane 206 is mainly responsible for business procedure interaction, delivering a data packet forwarding policy and a QoS control policy, and the like to a user plane. For example, as shown in FIG. 2, a control plane network element in the core network control plane 206 mainly includes a mobility management function (access and mobility function, AMF), a session management function (session management function, SMF), a policy control function (policy control function, PCF), an application function (application function, AF), a network exposure function (network exposure function, NEF), an authentication server function (authentication server function, AUSF), unified data management (unified data management, UDM), a network storage function (network repository function, NRF), a unified data repository (unified data repository, UDR), and the like. The AMF is mainly responsible for access and mobility management of the UE 201, for example, including mobility status management, allocation of a temporary user identity, and user authentication and authorization. The SMF is mainly responsible for session management functions, for example, management of creation and deletion of a user protocol data unit (protocol data unit, PDU) session, maintenance of a PDU session context and user plane forwarding pipeline information, UP network element selection, UP network element reselection, IP address allocation, bearer establishment, modification, and release, and QoS control. The UDM is mainly responsible for managing subscription data, and notifying a corresponding network element when the subscription data is modified. The UDR is mainly responsible for storing and retrieving subscription data, policy data, common architecture data, and the like, and is used by the UDM, the PCF, and the NEF to obtain related data. The UDR needs to provide different data access authentication mechanisms for different types of data, such as subscription data and policy data, to ensure data access security. For an invalid service-oriented operation or a data access request, the UDR needs to return a failure response with a proper cause value. The AF is configured to provide a specific application-layer service for UE. When providing the service for the UE, the AF has a requirement on quality of service QoS (policy) and a charging (charging) policy and needs to notify the network. In addition, the AF also needs application-related information fed back by a core network. The NSSF is configured to be responsible for network slice selection. The NRF is configured to be responsible for a registration and discovery function of a network element, and maintain information about the network element, for example, an instance identifier, a type, a PLMN, a slice-related identifier, an IP address or an FQDN, a capability of the network element, and a supported service of the network element.

The PCF is mainly responsible for executing policy control, and is similar to a policy and charging rules function (policy and charging rules function, PCRF) network element in the long term evolution (long term evolution, LTE) technology, including generating and managing a user, a session, a quality of service (quality of service, QoS) flow processing policy, and quality of service, generating a charging rule, and delivering a corresponding rule to the UPF network element via the SMF. The AF is mainly responsible for providing functions of various business services, can interact with a core network through the NEF network element, and can interact with a policy management framework to perform policy management. The NEF is configured to: provide a framework, authentication, and an interface that are related to network capability exposure, and information between a network function of a 5G system and another network function. For detailed descriptions of each network element, refer to descriptions in a related technology. Details are not described herein again.

In the network architecture shown in FIG. 2, the UE 201 and the AMF communicate with each other through an N1 interface. The N1 interface is configured to transmit non-access stratum (non-access stratum, NAS) signaling. The AN 202 and the AMF communicate with each other through an N2 interface. The AN 202 and the UPF 203 communicate with each other through an N3 interface. The N3 interface is used to perform tunnel transmission of user data by using a GPRS tunneling protocol for the user plane (GPRS tunneling protocol for the user plane, GTP-U). The UPF 203 and the SMF communicate with each other through an N4 interface. The N4 interface is configured to perform policy configuration and the like on the UPF 203. The UPF 203 and the external DN 204 communicate with each other through an N6 interface. In a specific scenario, the N6 interface needs to support a dedicated line or an L2/L3 tunnel, and may communicate with a DN network according to an internet protocol (internet protocol, IP).

It should be noted herein that each network element in embodiments of this application may be the network element mentioned in the foregoing embodiment, or may be a network element that has a same function as the foregoing network element in a future communication system. For example, the user plane function network element may be the UPF network element, or may be a network element that has a same function as the UPF network element in the future communication system. The application function network element may be the AF network element, or may be a network element that has a same function as the AF network element. The policy management network element may be the PCF network element, or may be a network element that has a same function as the PCF network element.

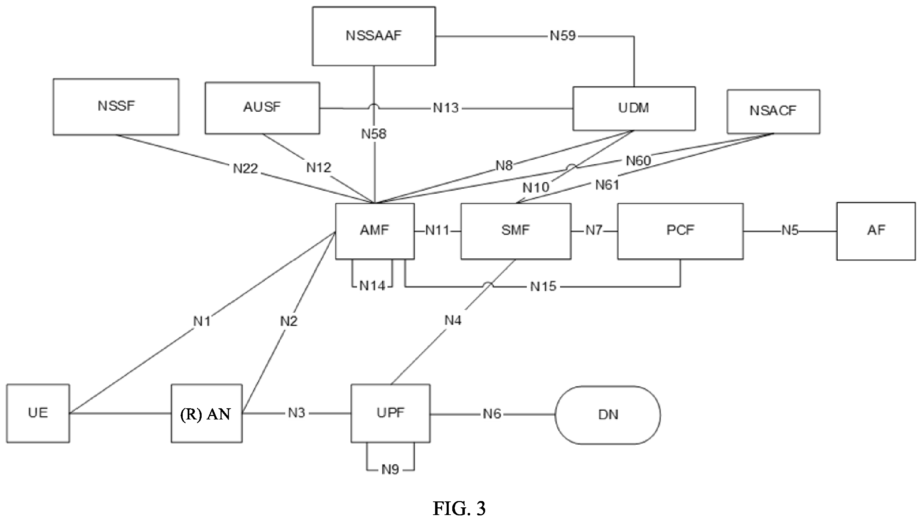

For example, the network architecture may also be a point-to-point interface-based network architecture shown in FIG. 3. A main difference between the architecture and the architecture shown in FIG. 2 lies in that an interface between network elements is a point-to-point interface instead of a service-oriented interface. For functions of the network elements, refer to descriptions of the network elements in FIG. 2. Details are not described herein again. In addition, for concepts of the point-to-point interface and the service-based interface and more detailed descriptions, refer to descriptions in a related technology. Details are not described herein again.

It should be noted again that FIG. 2 and FIG. 3 are merely examples, and do not constitute a limitation on a communication system architecture in this application.

In an implementation, an integrated radar communication base station may be deployed to enable a communication system to have a sensing capability. Further, precise communication may be implemented based on a precise sensing capability of a radar, thereby improving communication efficiency.

In some embodiments, a communication system may perform time division multiplexing or space division multiplexing on a resource used for communication and a resource used for sensing, to implement sensing of a surrounding environment or an object.

It should be understood that, a communication system having the sensing capability may receive a request sent by a sensing business requester or a sensing service requester for requesting a sensing result. Accordingly, the communication system needs to first determine a proper sensing function (sensing function, SF), then obtain the sensing result from the selected SF, and feed back the sensing result to the sensing business requester. The sensing business requester or the sensing service requester may be an AF, UE, or a core network element that needs to perform network optimization, and is referred to as a requester for short in the following. This is not limited in this application.

The SF in embodiments of this application may be considered as a network element that can collect a sensing result from a sensing device. For example, the sensing device is a sensing base station, and the SF network element may collect the sensing result from the sensing base station. In embodiments of this application, the SF may trigger the sensing device to perform sensing measurement on a region, and obtain a sensing result from the sensing device, where the sensing result may be used for a sensing service; or the SF may trigger the sensing device to perform sensing measurement that meets a sensing service requirement, and obtain a sensing result from the sensing device. It may be understood that the sensing results in the foregoing two cases may be understood as sensing results corresponding to sensing services. In embodiments of this application, a region in which sensing measurement is performed is also referred to as a sensing region. It may be understood that, in another possible expression, after performing sensing measurement, the sensing device sends sensing data to the SF, and a sensing result is obtained by the SF by performing further analysis or other processing on the sensing data; or in another possible expression, the sensing result obtained by the requester is referred to as sensing data.

The following describes three possible scenarios of three embodiments of this application.

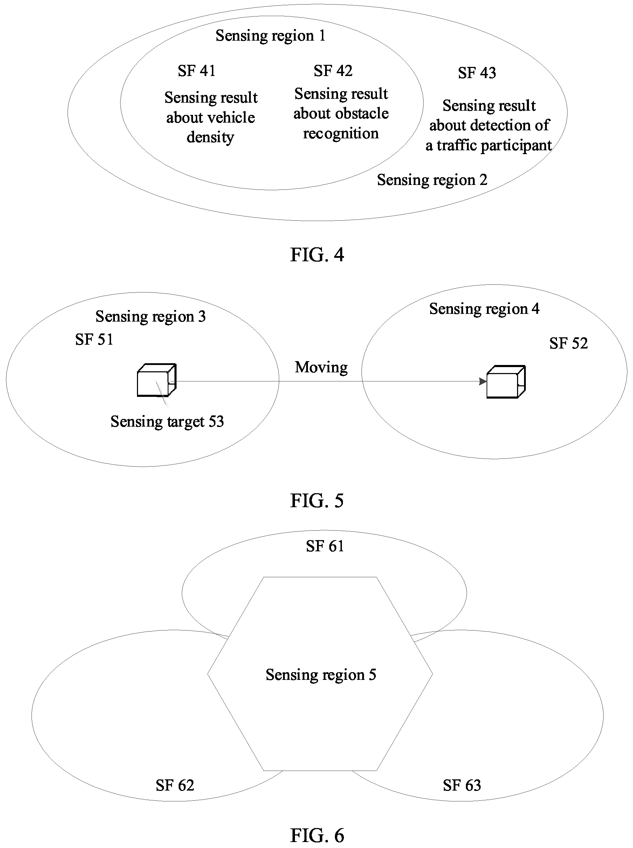

For example, in a first scenario, as shown in FIG. 4, it is assumed that a communication system includes an SF 41, an SF 42, and an SF 43. The SF 41 corresponds to a sensing region 1 and may provide a sensing result about vehicle density, the SF 42 corresponds to a sensing region 2 and may provide a sensing result about obstacle recognition, and the SF 43 corresponds to a sensing region 2 and may provide a sensing result about a traffic participant. A requester may request a sensing result of a sensing service 1. Specifically, the sensing result required by the sensing service 1 includes vehicle density information and obstacle recognition information. In response to the request of the requester, the SF 41 and the SF 42 should be selected to obtain sensing results and report the sensing results to the requester.

For example, in a second scenario, as shown in FIG. 5, it is assumed that a communication system includes an SF 51 and an SF 52. A requester may request a sensing result for a sensing target 53. The sensing target 53 is moving, and is expected to move from a sensing region 3 to a sensing region 4. The sensing target 53 is currently located in the sensing region 3, and is covered by a sensing region of the SF 51. After moving, the sensing target 53 is expected to be located in the sensing region 4, and is covered by a sensing region of the SF 52. In response to the request of the requester, the SF 51 and the SF 52 should be selected to obtain sensing results and report the sensing results to the requester. It may be understood that, in this scenario, the SF 51 may be selected first, and the SF 52 is selected when the sensing target 53 moves to or is about to move to the region 4.

For example, in a third scenario, as shown in FIG. 6, it is assumed that a communication system includes an SF 61, an SF 62, and an SF 63. A requester may request a sensing result for a sensing region 5. The sensing region 5 is covered by sensing regions of the SF 61, the SF 62, and the SF 63. In response to the request of the requester, the SF 61, the SF 62, and the SF 63 should be selected to obtain the sensing result and report the sensing result to the requester.

Therefore, how to select an SF to enable a requester to obtain more reliable and accurate sensing data becomes an urgent problem to be resolved. However, no related solution is proposed currently.

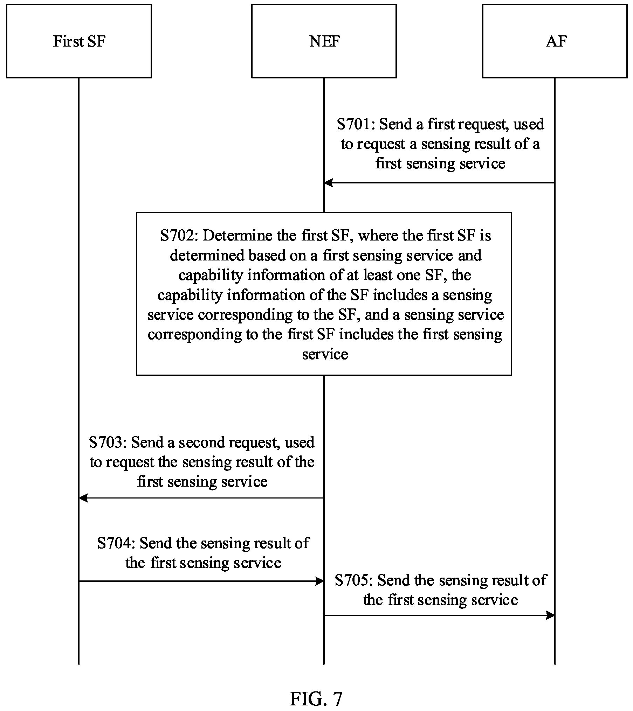

FIG. 7 is a schematic flowchart of a communication method according to an embodiment of this application. As shown in FIG. 7, the method includes the following steps.

S701: An AF sends a first request to an NEF, where the first request is used to request a sensing result of a first sensing service. Correspondingly, the NEF receives the first request.

The first request may also be understood as being used to request the first sensing service. A name of the first request is not limited in this application. It may be understood that the following requests for requesting sensing results of sensing services may be understood as such. Details are not described again.

For example, the first request may include an identifier (identifier, ID) of the first sensing service to indicate that the request is for the first sensing service corresponding to the identifier.

In this embodiment, for ease of description, the identifier of the sensing service is collectively referred to as a service identifier (service ID).

Optionally, the first request may include a first region identifier, where the first region identifier is used to identify a first sensing region, to indicate that the AF requests to sense the first sensing region.

Optionally, in S701, UE or another sensing service requester may send the first request to the NEF. Similarly, in subsequent embodiments, the AF may be replaced with UE or another sensing service requester. Details are not described herein again.

S702: The NEF determines a first SF, where the first SF is determined based on a first sensing service and capability information of at least one SF, the capability information of the SF includes a sensing service corresponding to the SF, and a sensing service corresponding to the first SF includes the first sensing service.

Alternatively, in other words, in this embodiment, the first SF is determined based on the requested first sensing service and the sensing service corresponding to the at least one SF. Alternatively, in other words, the first SF is determined based on the requested first sensing service and a correspondence between the SF and the sensing service.

It should be noted herein that how to configure the correspondence between the SF and the sensing service is not limited in this embodiment. For example, an identifier of the at least one SF and an identifier of a sensing service corresponding to each SF identifier may be configured, to indicate the sensing service corresponding to each SF. For another example, a service identifier of at least one sensing service and at least one SF identifier corresponding to an identifier of each sensing service may be configured, to indicate the correspondence between the sensing function and the sensing service.

The following describes two implementations of determining the first SF based on the capability information of the at least one SF.

In a first implementation solution, the correspondence between the SF and the sensing service is configured in an NRF.

Specifically, after the correspondence between the SF and the sensing service is configured in the NRF, a first implementation of determining the first SF includes: The NEF sends first discovery information to the NRF, where the first discovery information is used to request information about a sensing function; and receiving first response information sent by the NRF, where the first response information indicates capability information of at least one SF, that is, the NRF indicates, to the NEF, a sensing service corresponding to the at least one SF.

For example, the first response information may include an SF identifier list and a sensing service identifier corresponding to each SF identifier in the SF identifier list, to indicate the sensing service corresponding to the at least one SF.

It should be understood that after the NRF indicates, to the NEF, the sensing service corresponding to the at least one SF, correspondingly, the NEF determines, as the first SF based on a sensing service that corresponds to each of the at least one SF and that is indicated by the NRF, an SF corresponding to the first sensing service.

Optionally, in the first implementation, in some embodiments, when the NEF sends the first discovery information to the NRF, the first discovery information may further include information indicating a first sensing region corresponding to the first sensing service. In this case, the first discovery information may be considered as information requesting the NRF to feed back the SF corresponding to the first sensing region. Correspondingly, when indicating the capability information of the at least one SF to the NEF based on the first response information, the NRF may indicate only capability information of the SF corresponding to the first sensing region. Further, after receiving the first response information, the NEF determines, as the first SF, the SF corresponding to the first sensing service.

Optionally, when indicating the capability information of the at least one SF to the NEF, the NRF may further indicate a sensing region corresponding to the SF.

Optionally, when indicating the capability information of the at least one SF to the NEF, the NRF may further indicate a type of a sensing result and a corresponding sensing API that are provided by an SF corresponding to each SF identifier in the SF identifier list. One sensing service may correspond to one or more sensing APIs. For example, a result of a sensing service 1 includes sensing results of two sensing APIs.

In other words, in the first implementation of the first implementation solution, the first discovery information sent by the NEF may be considered as information used to request the NRF to feed back some SFs, and then the NEF determines the first SF based on the sensing service corresponding to the at least one SF fed back by the NRF. That is, the NEF selects the first SF from the at least one SF.

Specifically, after the correspondence between the SF and the sensing service is configured in the NRF, a second implementation of determining the first SF includes:

The NEF may send second discovery information to the NRF, where the second discovery information is used to request to discover an SF, and the second discovery information includes information indicating the first sensing service. In this case, the second discovery information may be considered as being used to request the NRF to feed back the first SF corresponding to the first sensing service. Correspondingly, after receiving the second discovery information, the NRF determines, based on the sensing service corresponding to each SF and the requested first sensing service, the SF (namely, the first SF) corresponding to the first sensing service, and then sends second response information to the NEF, where the second response information indicates the first SF. In other words, in this implementation, the NRF determines the first SF corresponding to the first sensing service, and then the NRF indicates the determined first SF to the NEF. Optionally, when indicating the first SF to the NEF, the NRF may further indicate a type of a sensing result and a corresponding sensing application programming interface (application programming interface, API) that the first SF can provide.

Optionally, the second discovery information may further include information about a requested sensing region. Correspondingly, when the NRF determines the first SF, the first SF corresponds to the requested sensing region in addition to the first sensing service.

Optionally, both the first discovery information and the second discovery information may include: an identifier or an address of a server that requests sensing data of the first sensing service, delay requirement indication information, or precision requirement indication information. Correspondingly, when the NRF determines, based on at least one of the identifier or the address of the server that requests the sensing data of the first sensing service, the delay requirement indication information, or the precision requirement indication information, an SF that needs to be fed back when feeding back information about the SF to the NEF.

It may be understood that the sensing service corresponding to the SF may be understood as a sensing service that can be provided or supported by the SF. For example, the SF may be connected to a sensing device that can or supports to provide a corresponding sensing service (for example, the SF is connected to a sensing device with high precision and a high refresh rate, so that reliable and accurate vehicle density data can be obtained), or the SF may have a capability of analyzing or processing sensing data reported by the sensing device to provide a corresponding sensing service (for example, the SF has a capability of recognizing obstacle information from sensing data reported by the sensing device).

S703: The NEF sends a second request to the first SF, where the second request is used to request a sensing result of the first sensing service.

S704: The first SF obtains the sensing result of the first sensing service, and sends the sensing result of the first sensing service to the NEF; and the NEF receives the sensing result of the first sensing service that is sent by the first SF.

Specifically, in this embodiment, after receiving the second request, the first SF obtains the sensing result of the first sensing service from a corresponding sensing device (for example, a sensing base station), and sends the sensing result to the NEF. Specifically, the first SF may trigger the corresponding sensing device to perform sensing measurement, and obtain a sensing result (or sensing data) obtained by the sensing device through sensing measurement.

It may be understood that, the first SF may directly forward the sensing result (or sensing data) obtained from the sensing device, or the first SF may further process the sensing result (or sensing data) obtained from the sensing device, and send a processed sensing result.

S705: The NEF sends the sensing result of the first sensing service to the AF.

In this embodiment, after obtaining the sensing result of the first sensing service, the NEF provides the sensing result of the first sensing service to the AF.

Optionally, when the first request is sent by UE or another sensing service requester in S701, the sensing result in S705 is also correspondingly sent to the UE or the another sensing service requester.

Optionally, S704 and S705 may be replaced with the following: The first SF obtains the sensing result of the first sensing service, and sends the sensing result to the AF. It may be understood that, that the first SF sends the sensing result to the AF via the NEF is a possible implementation. Alternatively, the first SF may send the sensing result to the AF directly or via another node. This is not limited in this application. It may be understood that, in the following, a manner in which the SF reports the sensing result to the AF via the NEF may be replaced with that the SF directly sends the sensing result to the AF or sends the sensing result to the AF via another node. Details are not described again.

It can be learned that, in the communication method provided in this embodiment, because the capability information of the at least one SF is configured on a core network side, after the NEF receives the first request used to request the sensing result of the first sensing service, the NEF may determine, based on the first sensing service and the capability information of the SF, the first SF corresponding to the first sensing service, to select an SF that meets a sensing service requirement. Because of the capability of the selected first SF, the sensing result reported by the first SF to the sensing service requester is reliable and accurate.

In an optional embodiment, when the AF in this embodiment of this application sends the first request to the NEF, in addition to requesting the sensing result of the first sensing service, the first request is further used to request a sensing result of a second sensing service. It should be understood that, in this manner, the NEF in this embodiment further determines an SF corresponding to the second sensing service. Then, the NEF requests the sensing result of the second sensing service from the SF corresponding to the second sensing service, and further sends the result of the requested second sensing service to the AF.

A method for determining, based on the second sensing service and the capability information of the at least one SF, the SF corresponding to the second sensing service may be similar to a method for determining the first SF based on the first sensing service and the capability information of the at least one SF, and details are not described herein again.

It should be understood that there may be a plurality of SFs corresponding to the first sensing service. For example, when there are a plurality of SFs corresponding to the first sensing service, a plurality of SFs corresponding to the first sensing service are determined.

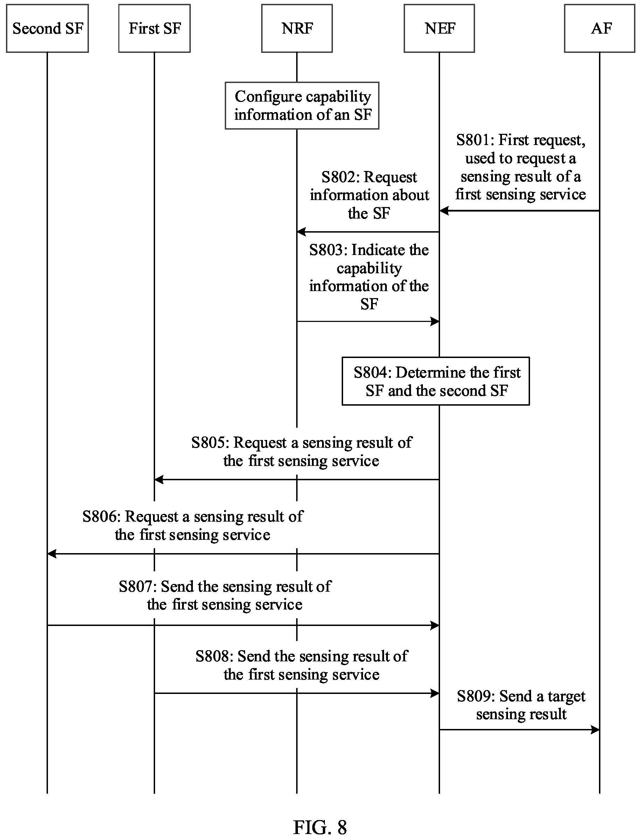

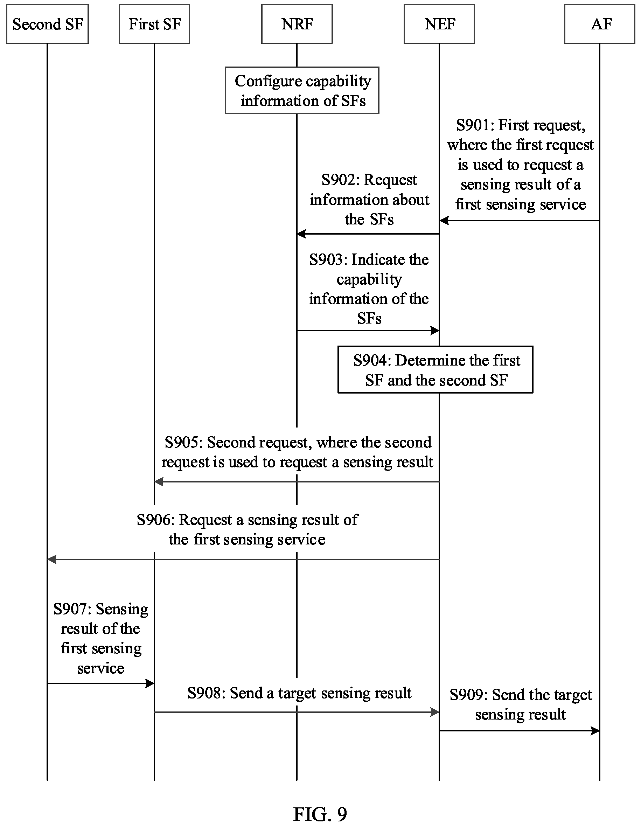

For ease of understanding, an example in which the NEF determines that SFs of the first sensing service include the first SF and a second SF when the AF requests the first sensing service is used below. With reference to FIG. 8 and FIG. 9, an embodiment in which the NEF obtains a sensing result that needs to be fed back to the AF is provided.

With reference to FIG. 8, Embodiment 1 is provided. As shown in FIG. 8, the method includes the following steps.

Prerequisite: A correspondence between a sensing service identifier and an SF identifier is configured in an NRF, to indicate a correspondence between a sensing service and an SF, or is also referred to as configuring capability information of the SF.

S801: An AF sends a first request to an NEF, and the NEF receives the first request, where the first request is used to request a sensing result of a first sensing service.

For example, in an implementation, the first request includes a service identifier of the first sensing service. Optionally, the first request may further include a region identifier of a first sensing region, to indicate that the AF requests to sense the first sensing region.

S802: The NEF sends first discovery information to an NRF, where the first discovery information is used to request information about SFs.

Optionally, when the first request sent by the AF further includes the region identifier of the first sensing region, the first discovery information sent by the NEF to the NRF may further include information indicating the first sensing region. In this case, the first discovery information may be considered as information used to request an SF of the first sensing region.

Optionally, this step may be replaced with: The NEF sends second discovery information to the NRF, where the second discovery information is used to request information about SFs, and the second discovery information includes information indicating the first sensing service. In other words, the second discovery information may also be considered as being used to request the NRF to feed back an SF corresponding to the first sensing service.

S803: The NRF sends first response information, where the first response information indicates capability information of the SFs.

In this embodiment, after receiving the first discovery information, the NRF indicates the capability information of the SFs to the NEF based on the first response information, that is, indicates sensing services corresponding to the SFs. Specifically, in this embodiment, the capability information, of the SFs, indicated by the first response information is capability information of two or more SFs.

Optionally, when the first discovery information may further include the information indicating the first sensing region, the capability information, of the SF, indicated by the NRF is capability information of the SF corresponding to the first sensing region.

Optionally, when indicating the capability information of the SF to the NEF based on the first response information, the NRF may further indicate a type of a sensing result and a corresponding sensing API that are provided by the SF.

Optionally, when S802 is replaced with that the NEF sends the second discovery information to the NRF, S803 may also be replaced with: The NRF sends second response information, where the second response information indicates the capability information of the SF corresponding to the first sensing service. Specifically, in this manner, after receiving the second discovery information, the NRF determines, based on a sensing service corresponding to each SF and the requested first sensing service, the SF corresponding to the first sensing service, and then sends the second response information to the NEF, where the second response information indicates the SF corresponding to the first sensing service. Optionally, when the second discovery information further includes a region identifier of the first sensing region, the SF that is indicated by the NRF and that corresponds to the first sensing service further corresponds to the first sensing region. Optionally, when indicating, to the NEF based on the second response information, the SF corresponding to the first sensing service, the NRF may further indicate the type of the sensing result and the corresponding sensing API that the SF can provide.

S804: The NEF determines the first SF and the second SF based on the first sensing service and the capability information, of the SFs, indicated by the NRF.

In this embodiment, after receiving the first response information, the NEF determines, based on the capability information, of the SF, indicated by the NRF, the SF corresponding to the first sensing service. In this embodiment, the SFs that are determined by the NEF and that correspond to the first sensing service include the first SF and the second SF.

Optionally, when the first request sent by the AF further includes the region identifier of the first sensing region, both the first SF and the second SF determined by the NEF correspond to the first sensing region.

Optionally, when S803 is replaced with that the NRF sends the second response information, S804 may also be replaced with: The NEF learns of the first SF and the second SF based on the second response information.

S805: The NEF sends a second request to the first SF, where the second request is used to request a sensing result of the first sensing service.

S806: The NEF sends a third request to the second SF, where the third request is used to request the sensing result of the first sensing service.

S807: The first SF sends the sensing result of the first sensing service to the NEF, and the NEF receives the sensing result of the first sensing service sent by the first SF.

In this embodiment, the sensing result of the first sensing service sent by the first SF is also referred to as a first sensing result.

For example, in an implementation, the first SF obtains the first sensing result from a first access network device/a first sensing device or from a first access network device based on an AMF network element, and then sends the first sensing result to the NEF.

S808: The second SF sends the sensing result of the first sensing service to the NEF, and the NEF receives the sensing result of the first sensing service sent by the second SF.

In this embodiment, the sensing result of the first sensing service sent by the second SF is also referred to as a second sensing result.

For example, in an implementation, the second SF obtains the second sensing result from a second access network device/a second sensing device or from a second access network device based on the AMF network element, and then sends the second sensing result to the NEF. In an example, the second access network device/second sensing device and the second access network device/second sensing device are a same device.

For details of S807 and S808, refer to the content of S704.

S809: The NEF sends a target sensing result to the AF.

In some embodiments, after receiving the first sensing result and the second sensing result, the NEF may not process the first sensing result and the second sensing result, but directly send the first sensing result and the second sensing result to the AF. That is, in this case, the target sensing result is the first sensing result and the second sensing result.

In some embodiments, after receiving the first sensing result and the second sensing result, the NEF may process the first sensing result and the second sensing result to obtain the target sensing result, and then send the target sensing result to the AF. The processing may be understood as fusion of the first sensing result and the second sensing result. For example, the processing may be performing cross-verification by using the first sensing result and the second sensing result, to obtain an accurate result; or the processing may be superimposing the first sensing result and the second sensing result. It may be understood that, in the following, the processing may also be performed by the SF.

It can be learned that, in this implementation, the sensing results of the first sensing service in the first SF and the second SF are aggregated (also referred to as fusion) at the NEF, and then are uniformly sent by the NEF network element to the AF network element, which is also referred to as being exposed to the AF network element.

In some embodiments, S807 and S809 may be replaced with that the first SF sends the first sensing result to the AF, and S808 and S809 may be replaced with that the second SF sends the second sensing result to the AF. For details, refer to the foregoing replacement content of S704 and S705.

Optionally, it should be noted that in the embodiment shown in FIG. 8, S802 and S803 may be optional. For example, the capability information of the SF may be configured in the NEF, that is, the sensing service corresponding to the SF is configured, or the correspondence between the SF and the sensing service is configured in the NEF. In this way, after receiving the first request that is sent by the AF and that is used to request the first sensing service, the NEF may directly determine the first SF and the second SF based on the correspondence that is between the SF and the sensing service and that is configured in the NEF. In other words, in this case, S802 and S803 may not exist in the embodiment shown in FIG. 8.

In an optional embodiment, the NEF may further enable the SF to perform sensing result fusion, then receive a fused sensing result sent by the SF, and send the fused sensing result to the AF. With reference to FIG. 9, the following provides a second embodiment by using an example in which the first SF is a network element for performing a sensing fusion result. As shown in FIG. 9, the method includes the following steps.

S901: An AF sends a first request to an NEF, and the NEF receives the first request, where the first request is used to request a sensing result of a first sensing service.

S902: The NEF sends first discovery information to an NRF, where the first discovery information is used to request information about an SF.

S903: The NRF sends first response information, where the first response information indicates capability information of the SF.

S904: The NEF determines a first SF and a second SF based on the first sensing service and the capability information, of the SF, indicated by the NRF.

For detailed descriptions of SS901 to S904, refer to S801 to S804 in the embodiment in FIG. 8. Details are not described herein again.

A difference between S904 and S804 is that the NEF may determine that the first SF is a network element fusing a plurality of sensing results. It may be understood that the first SF may also be a network element configured to receive a sensing result in the second SF, or the first SF may also be an SF configured to report the sensing result. This is not limited in this application. Similarly, in S905 and S906, indication information indicating that the first SF is the network element fusing the plurality of sensing results may have similar different expressions. Details are not described again.

S905: The NEF sends a second request to the first SF, where the second request is used to request a sensing result of the first sensing service.

Optionally, the second request includes the indication information indicating that the first SF is the network element fusing the plurality of sensing results. When the second request does not include the indication information, the indication information is carried in a third request in S906. In other words, the second request and/or the third request include/includes the indication information.

For example, 1 information bit may indicate that the first SF is the network element fusing the plurality of sensing results.

Optionally, the second request may further include information indicating the second SF, for example, an SF identifier of the second SF and/or address information of the second SF, to indicate to the first SF that fusion is performed based on the sensing result in the second SF.

Optionally, the second request may further include an indicated fusion manner for fusing sensing results of a plurality of SFs. Correspondingly, the first SF fuse the plurality of sensing results based on the indicated fusion manner.

S906: The NEF sends the third request to the second SF, where the third request is used to request the sensing result of the first sensing service.

Optionally, the third request includes information indicating that the first SF is the network element fusing the plurality of sensing results. For example, the third request includes an identifier of the first SF, to indicate the information that the first SF is the network element fusing the plurality of sensing results. In this way, the second SF knows that the sensing result should be sent to the first SF.

Optionally, when the third request includes the information indicating that the first SF is the network element fusing the plurality of sensing results, the second request in S905 may not include the indication information indicating that the first SF is the network element fusing the plurality of sensing results. In this case, when receiving the sensing result sent by the second SF, the first SF may learn that the first SF is the network element fusing the plurality of sensing results.

S907: The second SF obtains a sensing result, and sends the sensing result to the first SF; and the first SF receives the sensing result sent by the second SF.

Optionally, when the third request includes information indicating the second SF, the second SF may actively send the sensing result sent by the second SF to the first SF.

Optionally, when the third request does not include the information indicating the second SF, the second request may include the SF identifier of the second SF/or the address information of the second SF, and then the first SF requests the second SF to send the sensing result.

For a specific process in which the second SF obtains the sensing result, refer to the content in S704. Details are not described again.

S908: The first SF obtains the sensing result, and sends the target sensing result to the NEF.

In some embodiments, after receiving the second sensing result sent by the second SF, the first SF may directly send the first sensing result and the second sensing result to the NEF without processing the second sensing result sent by the second SF and the first sensing result in the first SF. In other words, in this scenario, the target sensing result is the first sensing result and the second sensing result.

In some embodiments, after receiving the first sensing result and the second sensing result, the first SF may process the first sensing result and the second sensing result to obtain the target sensing result, and then send the target sensing result to the NEF.

S909: The NEF sends the target sensing result to the AF.

In some embodiments, S908 and S909 may be replaced with that the first SF obtains the sensing result and sends the target sensing result to the AF.

It can be learned that in the embodiment shown in FIG. 9, after determining the first SF and the second SF, the NEF requests the second SF to feed back the first sensing result to the first SF; and then the first SF provides, for the NEF, the sensing result, of the first sensing service, requested by the AF. Alternatively, it may be considered that, in this implementation, the sensing results of the first SF and the second SF are aggregated (also referred to as fused) at the first SF, and then sent by the first SF to the NEF network element. Further, the NEF sends the sensing results to the AF. It should be understood that, in this manner, complexity of application layer data fusion can be reduced.

As shown in FIG. 5 and FIG. 6, the following situation further exists: When the AF requests a sensing result of sensing a sensing region, the sensing result also needs to be provided by a plurality of SFs. In this case, if only a sensing result in one SF is fed back, a problem that the fed-back sensing result is inaccurate also exists. To resolve this problem, the following provides a communication method provided in this application with reference to several embodiments.

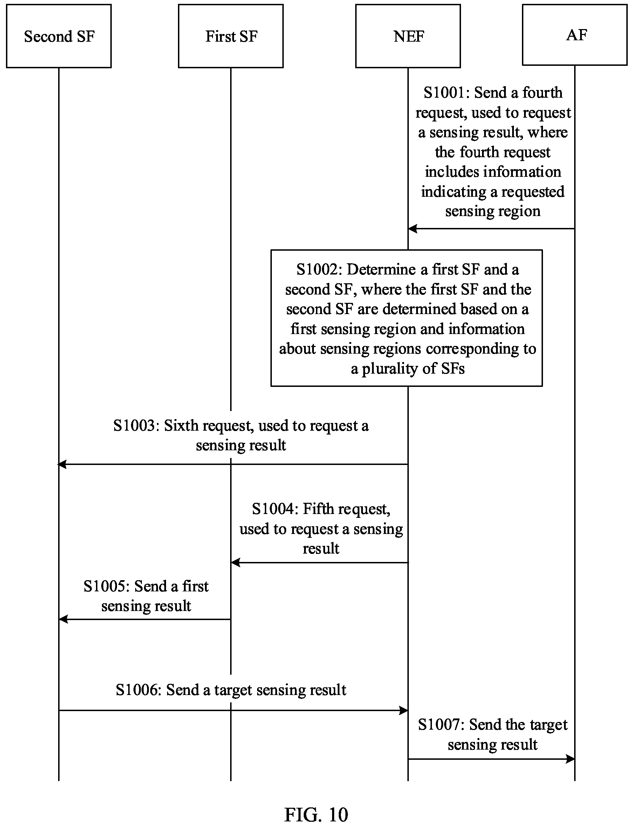

FIG. 10 shows a communication method according to an embodiment of this application. As shown in FIG. 10, the method includes the following steps.

S1001: An AF sends a fourth request to an NEF, where the fourth request is used to request a sensing result, and the fourth request includes information indicating a requested sensing region.

For example, the fourth request may include an identifier of the requested sensing region. Optionally, the fourth request may further include characteristic information of a sensing target, or movement range information of the sensing target.

Optionally, the fourth request may further include an identifier of a sensing service, to indicate a requested sensing service.

For example, the fourth request includes identifiers of a plurality of different sensing regions. For example, FIG. 5 is used as an example. It is assumed that the AF requests a sensing result of sensing a sensing region 3 and a sensing result of sensing a sensing region 4, the fourth request sent by the AF may include an identifier of the sensing region 3 and an identifier of the sensing region 4.

S1002: The NEF determines a first SF and a second SF, where the first SF and the second SF are determined based on a first sensing region and information about sensing regions corresponding to a plurality of SFs, and a sensing region corresponding to the first sensing function and a sensing region corresponding to the second sensing function cover the requested sensing region.

In this embodiment, after the NEF receives the fourth request from the AF, the NEF first determines the SF. The determined SF covers the requested sensing region. In this way, it is ensured that the determined SF is an SF that can provide a sensing result requested by the AF.

In this embodiment of this application, the NEF determines at least two SFs. In this embodiment, the at least two SFs include the first SF and the second SF. Specifically, the NEF determines the SF based on the first sensing region and the information about the sensing regions corresponding to the plurality of SFs. Alternatively, in other words, the NEF determines the SF based on the requested first sensing region and the correspondence between the plurality of SFs and the sensing regions.

The following describes two implementations of determining the SF based on the information about the sensing regions corresponding to the plurality of SFs.

For example, a correspondence between an SF and a sensing region may be configured in the NRF. Specifically, after the correspondence between the SF and the sensing region is configured in the NRF, an implementation of determining the SF includes: The NEF requests information about the SF from the NRF; and correspondingly, the NRF indicates, to the NEF, sensing regions corresponding to a plurality of SFs. Further, after the NRF indicates, to the NEF, the sensing regions corresponding to the plurality of SFs, the NEF determines at least two SFs based on the sensing regions corresponding to the plurality of SFs and the requested sensing region. Specifically, the determined sensing region corresponding to the SF covers the requested sensing region. In other words, in this implementation, the NEF selects, from the plurality of SFs, an SF that can provide the sensing result requested by the AF.

The sensing region corresponding to the SF covers the requested sensing region. In other words, the requested sensing region is covered by the sensing region corresponding to the SF.

Optionally, when requesting the information about the SF from the NRF, the NEF may further indicate the sensing region requested by the AF. Correspondingly, the NRF determines the at least two SFs based on a sensing region corresponding to each SF and the requested sensing region, and then indicates the determined SFs to the NEF. In other words, in this implementation, the NRF selects the SF.

It should be noted herein that, in this embodiment, that the requested sensing region is covered by the sensing region corresponding to the SF includes: The requested sensing region is completely or partially covered by the sensing region corresponding to the SF. For example, FIG. 5 is used as an example. If requested sensing regions are the sensing region 3 and the sensing region 4, in this case, the determined SFs include the SF 51 and the SF 52. In this example, the requested sensing region 3 is completely covered by the sensing region 3 corresponding to the SF 51, and the requested sensing region 4 is completely covered by the sensing region 4 corresponding to the SF 52. For another example, FIG. 6 is used as an example. If the requested sensing region is the sensing region 5 in the figure, in this case, the sensing region 5 is partially covered by the sensing region corresponding to the SF 61, partially covered by the sensing region corresponding to the SF 62, and partially covered by the sensing region corresponding to the SF 63. Therefore, the determined SFs include the SF 61, the SF 62, and the SF 63.

Optionally, in this embodiment, after determining the first SF and the second SF, the NEF determines an SF that needs to fuse sensing results, and then receives a sensing result sent by the SF that fuses the sensing results, and sends the sensing result to the AF.

For example, an example in which the NEF determines that the second SF is the network element fusing sensing results is used for description. As shown in FIG. 10, when the NEF determines that the second SF is the network element fusing the sensing results, the method further includes S1003 to S1005.

S1003: The NEF sends a sixth request to the second SF, where the sixth request is used to request a sensing result.

Optionally, the sixth request includes indication information indicating that the second SF is the network element fusing the plurality of sensing results. When the sixth request does not include the indication information, the fifth request in S1004 carries the indication information. In other words, a fifth request and/or a sixth request include/includes the indication information.

For example, 1 information bit may indicate that the second SF is the network element fusing the plurality of sensing results.

Optionally, the sixth request may further include information indicating the first SF, for example, an SF identifier of the first SF and/or address information of the first SF, to indicate to the second SF that fusion is performed based on the sensing result in the first SF.

Optionally, the sixth request may further include an indicated fusion manner for fusing the sensing results of the plurality of SFs. Correspondingly, the second SF fuse the plurality of sensing results based on the indicated fusion manner.

S1004: The NEF sends the fifth request to the first SF, where the fifth request is used to request a sensing result.

Optionally, the fifth request includes the information indicating that the second SF is the network element fusing the plurality of sensing results. For example, the fifth request includes the SF identifier of the second SF, to indicate information that the second SF is the network element fusing the plurality of sensing results. In this way, the first SF knows that the sensing result should be sent to the second SF.

Optionally, when the fifth request includes the information indicating that the second SF is the network element fusing the plurality of sensing results, the sixth request in S1003 may not include the indication information indicating that the second SF is the network element fusing the plurality of sensing results. In this case, when receiving the sensing result sent by the first SF, the second SF may learn that the second SF is the network element fusing the plurality of sensing results.

S1005: The first SF obtains the sensing result, and sends the sensing result to the second SF; and the second SF receives the sensing result sent by the first SF.

In this embodiment, the sensing result sent by the first SF to the second SF is also referred to as a first sensing result.

Optionally, when the fifth request includes the SF identifier of the second SF, the first SF may actively send the sensing result in the first SF to the second SF.

Optionally, the sixth request includes the SF identifier of the first SF, and the second SF may request the first SF to send the sensing result. In this implementation, the NEF may not send the fifth request to the first SF, that is, may not perform S1004, but the second SF triggers the first SF to provide the sensing result.

Specifically, the first SF may trigger the corresponding sensing device to perform sensing measurement, and obtain a sensing result (or sensing data) obtained by the sensing device through sensing measurement.

It may be understood that, the first SF may directly forward the sensing result (or sensing data) obtained from the sensing device, or the first SF may further process the sensing result (or sensing data) obtained from the sensing device, and send a processed sensing result.

S1006: The second SF obtains the sensing result, and sends a target sensing result to the NEF.

In some embodiments, after receiving the first sensing result sent by the first SF, the second SF may directly send the first sensing result and a second sensing result to the AF without processing the first sensing result sent by the first SF and a second sensing result in the second SF. In other words, in this scenario, the target sensing result is the first sensing result and the second sensing result.

In some embodiments, after receiving the first sensing result and the second sensing result, the second SF may process the first sensing result and the second sensing result to obtain the target sensing result, and then send the target sensing result to the AF.

S1007: The NEF sends the target sensing result to the AF.

In some embodiments, S1006 and S1007 may be replaced with that the second SF obtains the sensing result and sends the target sensing result to the AF.

It can be learned that, in the communication method provided in this embodiment, when the NEF receives the request used for the AF, the NEF may determine, based on interaction with the NRF, the first SF and the second SF whose corresponding sensing regions are included in the sensing region requested by the AF, and then perform fusion processing on the sensing results at the first SF or the second SF, to obtain the target sensing result sent to the AF.

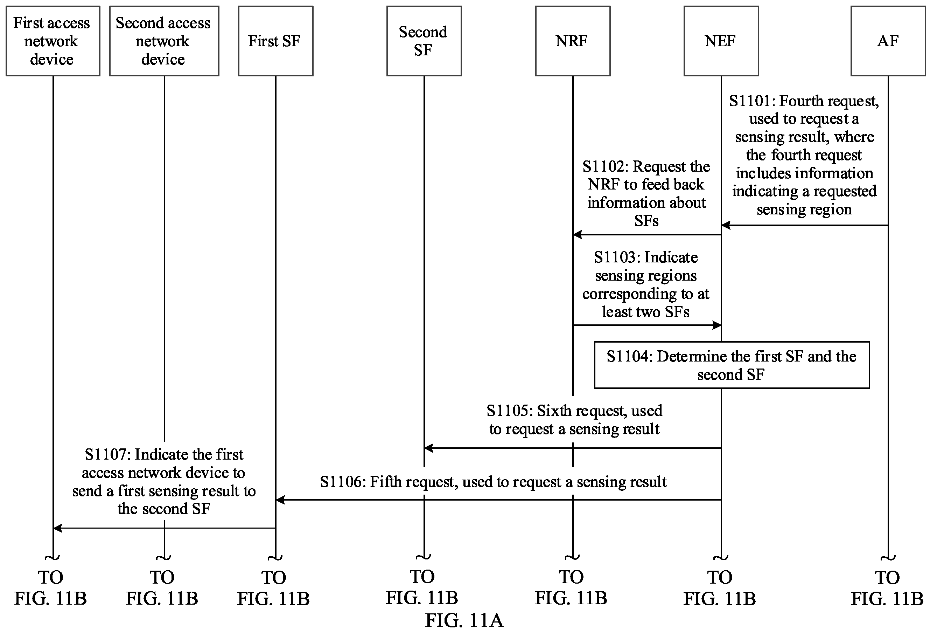

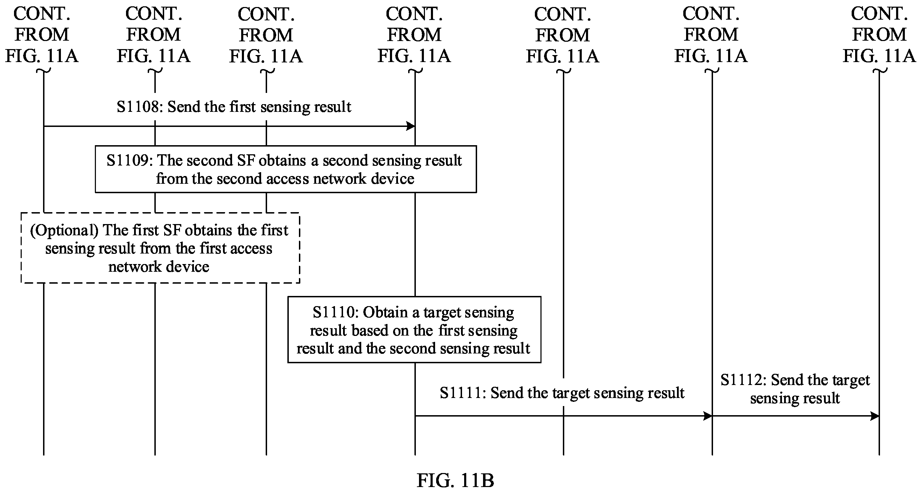

For the embodiment shown in FIG. 10, in an optional embodiment, when receiving the fifth request that is sent by the NEF and that requests the sensing result, the first SF may indicate a first access network device to send the sensing result to the second SF. Refer to FIG. 11A and FIG. 11B. A detailed embodiment is provided. As shown in FIG. 11A and FIG. 11B, the method includes the following steps.

S1101: An AF sends a fourth request to an NEF, where the fourth request is used to request a sensing result, and the fourth request includes information indicating a requested sensing region.

For example, FIG. 5 is used as an example. The fourth request may include the identifier of the sensing region 3 and the identifier of the sensing region 4. In this case, the fourth request may be considered as being used to request a sensing result of sensing the sensing region 3 and a sensing result of sensing the sensing region 4.

S1102: The NEF requests the NRF to feed back information about SFs.

Optionally, when requesting the NRF to feed back the information about the SFs, the NEF may further indicate a region identifier of the requested sensing region. For example, FIG. 5 is used as an example. The NEF may indicate a region identifier of the sensing region 3 and a region identifier of the sensing region 4 to the NRF. In this case, it may be considered that the NEF requests the NRF to feed back the information about the SF whose corresponding sensing region includes the sensing region 3 and/or the sensing region 4.

S1103: The NRF indicates, to the NEF, sensing regions corresponding to at least two SFs.

For example, the information used by the NRF to indicate, to the NEF, the sensing regions corresponding to the at least two SFs includes an SF identifier list, and information about a sensing region corresponding to each SF in the SF identifier list.

Optionally, if the NEF indicates the region identifier of the requested sensing region to the NRF, that the NRF indicates, to the NEF, the sensing regions corresponding to the at least two SFs may be replaced with that the NRF indicates, to the NEF, determined SFs whose corresponding sensing regions cover the requested sensing region. In this manner, further optionally, the NRF may further indicate the sensing regions respectively corresponding to the determined SFs.

S1104: The NEF determines a first SF and a second SF based on the sensing regions that correspond to the at least two SFs and that are indicated by the NRF.

For example, after the NEF receives the information that is about the sensing regions corresponding to the at least two SFs and that is indicated by the NRF, the NEF determines, based on the requested sensing region, SFs whose corresponding sensing regions cover the requested sensing region.

Optionally, when the NRF indicates, to the NEF, only the SF whose corresponding sensing region covers the requested sensing region, the NEF may directly learn of the SF whose corresponding sensing region covers the requested sensing region.

For content of S1102 to S1104, refer to S1002 in the embodiment shown in FIG. 10. Details are not described again.

In this embodiment, when the SFs determined by the NEF includes the first SF and the second SF,
in this embodiment, after determining the first SF and the second SF, the NEF determines an SF that needs to fuse sensing results, and then receives a sensing result sent by the SF that fuses the sensing results, and sends the sensing result to the AF. An example in which the NEF determines that the second SF is the network element fusing the sensing results is still used for description. As shown in FIG. 11A and FIG. 11B, the NEF determines that the second SF is the network element fusing the sensing results.

S1105: The NEF sends a sixth request to the second SF, where the sixth request is used to request the sensing result.

Optionally, the sixth request includes indication information indicating that the second SF is the network element fusing the plurality of sensing results. When the sixth request does not include the indication information, the fifth request in S1106 carries the indication information. In other words, a fifth request and/or the sixth request include/includes the indication information.

S1106: The NEF sends the fifth request to the first SF, where the fifth request is used to request the sensing result.

For detailed descriptions of S1105 and S1106, refer to content of S1003 and S1004 in the embodiment in FIG. 10. Details are not described herein again.

S1107: The first SF indicates a first access network device to send a first sensing result to the second SF.

It should be noted herein that a specific indication manner is not limited in this embodiment. For example, the first SF directly indicates the first access network device, or the first SF network element indicates the first access network device via an AMF network element. For example, the first SF may include an SF identifier of the second SF in information that is sent to the first access network device and that is used to request the sensing result, to indicate the first SF to send the first sensing result to the second SF.

Optionally, the first SF may alternatively indicate the first access network device to send first sensing data to the first SF. Correspondingly, in addition to reporting the first sensing result to the second SF, the first access network device also reports the first sensing result to the first SF.

S1108: The first access network device sends the first sensing result to the second SF, and the second SF receives the first sensing result sent by the first access network device.

S1109: The second SF obtains a second sensing result from a second access network device.

For example, the second SF sends, to the second access network device, information used to request the sensing result. After receiving the information, the second access network device sends the second sensing result to the second access network device.

In some embodiments, the second SF may indicate, via the AMF, the second access network device to send the second sensing result.

S1110: The second SF obtains a target sensing result based on the first sensing result and the second sensing result.

S1111: The second SF sends the target sensing result to the NEF.

S1112: The NEF sends the target sensing result to the AF.

In some embodiments, S1111 and S1112 may be replaced with that the second SF sends the target sensing result to the AF.

It can be learned that, in the method provided in the embodiment shown in FIG. 11A and FIG. 11B, after determining the first SF and the second SF that can provide the sensing results, the NEF indicates the first SF to send the first sensing result to the second SF, and then the first SF indicate the first access network device to send the first sensing result to the second SF. Then, the second SF sends the target sensing result obtained through fusion to the NEF network element, and finally the NEF network element feeds back the target sensing result obtained through fusion to the AF network element. It should be understood that, in this manner, complexity of application layer data fusion can be reduced.

Based on FIG. 11A and FIG. 11B, in an optional embodiment, in this embodiment of this application, when sending the fifth request to the first SF, the NEF may further include, in the fifth request, a region identifier of a sensing region corresponding to the second SF. In this way, for the first SF, when it is determined that the sensing target moves from a sensing region corresponding to the first SF to the sensing region corresponding to the second SF, the first sensing result is reported to the second SF. Then, the second SF performs fusion processing based on the first sensing result and the second sensing result to obtain the target sensing result, and sends the target sensing result to the NEF.

The foregoing separately describes embodiments in which the NRF indicates the first SF and the second SF to the NEF, and then the NEF network element obtains the first sensing result in the first SF and the second sensing result in the second SF, and sends the first sensing result and the second sensing result to the AF.

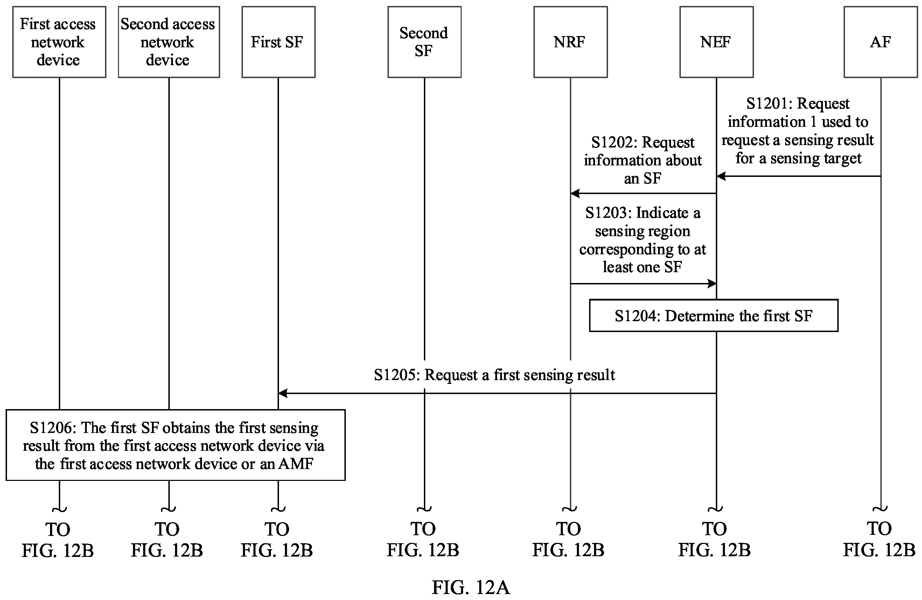

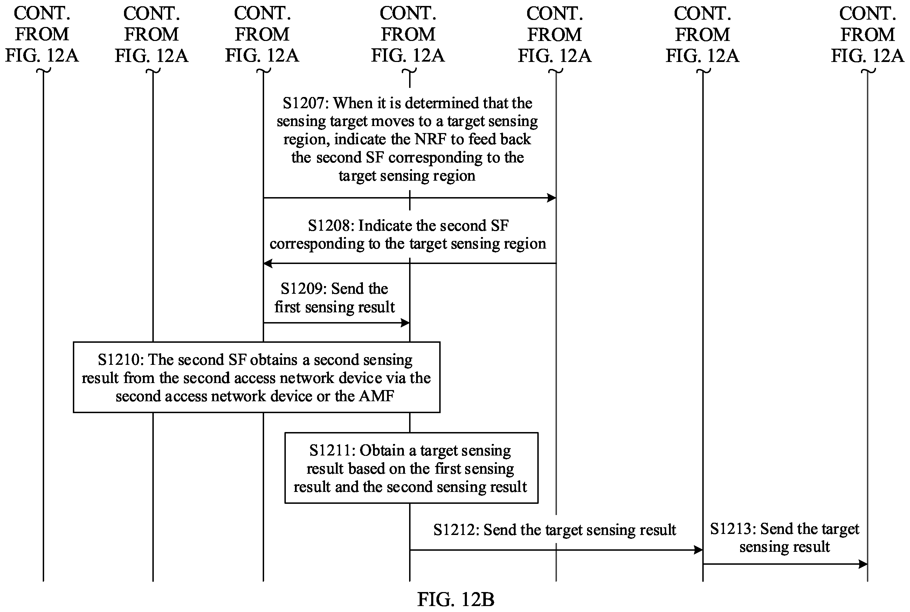

Refer to FIG. 12A and FIG. 12B. The following further provides another communication method. As shown in FIG. 12A and FIG. 12B, the method includes the following steps.

S1201: An AF sends request information 1 to an NEF, and the NEF receives the request information 1, where the request information 1 is used to request a sensing result.

In this embodiment, the request information 1 includes a start position of a requested sensing target.

Optionally, the request information 1 may further include characteristic information (for example, a size of the sensing target) indicating the sensing target.

S1202: The NEF requests the information about an SF from an NRF.

S1203: The NRF indicates, to the NEF, a sensing region corresponding to at least one SF.

S1204: The NEF determines a first SF.

For example, the first SF may be specifically determined by the NRF, and then indicated by the NRF to the NEF, so that the NEF learns of the first SF.

For another example, the NRF may indicate, to the NEF, sensing regions respectively corresponding to a plurality of SFs, and then the NEF determines the first SF based on a requested sensing region and the sensing regions that respectively correspond to the plurality of SFs and that are indicated by the NRF.

S1205: The NEF requests a sensing result from the first SF.

In some embodiments, when requesting the sensing result from the first SF, the NEF indicates a start position of the sensing target to the first SF. Optionally, address information of the AF may be indicated.

S1206: The first SF obtains the first sensing result from the first access network device via the first access network device or an AMF.

S1207: When determining that the sensing target is about to move from a sensing region corresponding to the first SF to a target sensing region, the first SF indicates the NRF to feed back a second SF corresponding to the target sensing region.

For example, the first SF may send a region identifier of the target sensing region, or target location information, namely, information about a position at which a target leaves the first sensing region or information about a position at which a target enters another sensing region, to the NRF, to indicate that the sensing target is about to move to the target sensing region.

Optionally, this step may be replaced with: When determining that the sensing target is about to move from the sensing region corresponding to the first SF to the target sensing region, the first SF indicates the NRF to feed back information about an SF.

S1208: The NRF indicates, to the first SF, the second SF corresponding to the target sensing region.

In an implementation, the NRF may include an SF identifier of the second SF or address information of the second SF in information indicating, to the first SF, the second SF corresponding to the target sensing region.

Optionally, when S1207 is replaced with that the first SF indicates the NRF to feed back the information about the SF when determining that the sensing target is about to move from the sensing region corresponding to the first SF to the target sensing region, S1208 may also be replaced with that the NRF indicates, to the first SF, a sensing region corresponding to at least one SF, and correspondingly, the first SF determines the second SF based on a sensing region that corresponds to the at least one SF and that is indicated by the NRF and the target sensing region.

S1209: The first SF sends a first sensing result to the second SF.

In some embodiments, when sending the first sensing result to the second SF, the first SF may further send information such as a characteristic and the start position of the sensing target.

Optionally, the first SF may further indicate, to the second SF, that the second SF is a network element fusing a plurality of sensing results.

S1210: The second SF obtains a second sensing result from a second access network device via the second access network device or the AMF.

S1211: The second SF obtains a target sensing result based on the first sensing result and the second sensing result.

S1212: The second SF sends the target sensing result to the NEF.

S1213: The NEF sends the target sensing result to the AF.

Optionally, S1209 to S1212 may also be replaced with that the first SF requests the second SF to feed back the first sensing result to the first SF; correspondingly, the first SF receives the first sensing result fed back by the second SF; the first SF fuse the first sensing result and the second sensing result to obtain the target sensing result; and the first SF sends the target sensing result to the NEF.

It can be learned that, in the method provided in the embodiment of FIG. 12A and FIG. 12B, when the sensing target moves from the sensing region corresponding to the first SF to the target sensing region, the first SF requests the second SF corresponding to the target sensing region from the NRF, and then sends the first sensing result provided by the first SF to the second SF, or the second SF sends the second sensing result to the first SF, so that the first SF or the second SF obtains the target sensing result, feeds back the target sensing result to the NEF, and further exposes the target sensing result to the AF.

It should be noted that the SF identifier described above in this application may be any information that can uniquely identify the SF, for example, may be address information of the SF. Similarly, in the foregoing embodiment, when the NRF indicates the information about the SF to the NEF, the information that is about the SF and that is indicated by the NRF may be an identifier of the SF and/or address information of the SF. Optionally, when the NRF indicates the information about the SF to the NEF, a sensing service and/or a sensing region corresponding to the SF may be further included.

The foregoing separately describes embodiments of determining, based on the correspondence between the SF and the sensing service, the SF that can provide the sensing result requested by the AF, and embodiments of determining, based on the correspondence between the SF and the sensing region, the SF that can provide the sensing result t requested by the AF It may be understood that the foregoing method for determining the SF based on the correspondence between the SF and the sensing service and the method for determining the SF based on the correspondence between the SF and the sensing region may alternatively be combined.

For example, optionally, the NRF may store a correspondence between the sensing service and the sensing region that correspond to the SF. For example, the NRF stores a correspondence between the SF identifier and/or the address information of the SF and the sensing service and the sensing region.

Correspondingly, after the NEF receives the request from the AF, there may be the following two cases:
(1). The NEF requests the information about the SF from the NRF. After receiving the request from the NEF, the NRF indicates, to the NEF, the sensing service and/or the sensing region corresponding to the SF. For example, when the sensing service and/or the sensing region corresponding to the SF are/is indicated to the NEF, the indicated information includes the SF identifier and/or the address information of the SF, and the information about the sensing service and/or the sensing region corresponding to the SF. Then, the NEF determines, based on the request from the AF and the indication of the NRF, the SF that needs to be selected.
(2). The NEF requests the information about the SF from the NRF. When requesting the information about the SF from the NEF, the NEF further indicates, to the NRF, the sensing service and/or sensing region requested by the AF. Correspondingly, the NRF indicates, to the NEF, only the determined SF that can provide the sensing result requested by the AF, for example, the information indicated to the NEF includes the SF identifier of the SF and/or the address information of the SF.

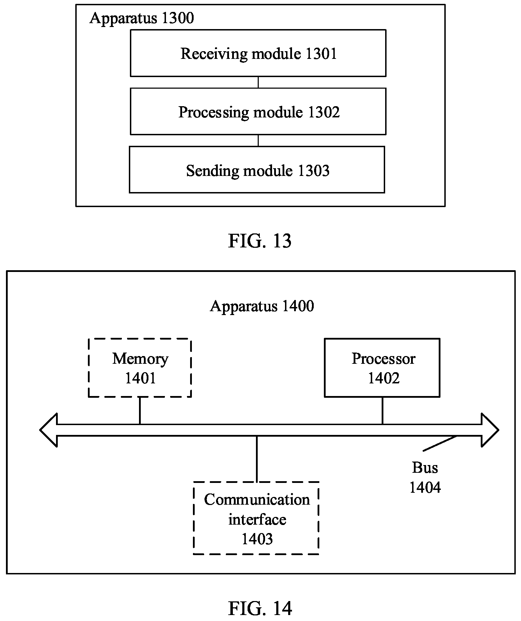

The foregoing describes in detail the communication method in embodiments of this application with reference to FIG. 7 to FIG. 12B. The following describes a communication apparatus provided in embodiments of this application with reference to FIG. 13 and FIG. 14.

FIG. 13 is a diagram of a structure of a communication apparatus according to an embodiment of this application. Specifically, as shown in FIG. 13, the apparatus 1300 includes a receiving module 1301, a processing module 1302, and a sending module 1303.

In a first embodiment, the communication apparatus is used in an NEF network element.

Specifically, in a first embodiment, the receiving module 1301 is configured to receive a first request from an application function, where the first request is used to request a sensing result of a first sensing service; the processing module 1302 is configured to determine a first sensing function, where the first sensing function is determined based on the first sensing service and capability information of at least one sensing function, the capability information of the sensing function includes a sensing service corresponding to the sensing function, and a sensing service corresponding to the first sensing function includes the first sensing service; and the sending module 1303 is configured to send a second request to the first sensing function, where the second request is used to request a sensing result of the first sensing service.

In a possible implementation, the sending module 1303 is further configured to send first discovery information to a network storage function, where the first discovery information is used to request information about a sensing function; and the receiving module 1301 is further configured to receive first response information from the network storage function, where the first response information indicates the capability information of the at least one sensing function.

In a possible implementation, the first discovery information further includes information indicating a first sensing region requested by the application function, the capability information of the at least one sensing function is capability information of at least one sensing function corresponding to a first sensing region, and a sensing region corresponding to the first sensing function includes the first sensing region.

In a possible implementation, the first response information includes an identifier of the at least one sensing function.

In a possible implementation, the sending module 1303 is further configured to send second discovery information to the network storage function network storage function, where the second discovery information is used to request to discover a sensing function, and the second discovery information includes information indicating the first sensing service.

The receiving module 1301 is further configured to receive second response information from the network storage function, where the second response information indicates the first sensing function.

In a possible implementation, that the first sensing function is determined based on the first sensing service and the capability information of the at least one sensing function includes: The first sensing function is determined based on the first sensing service, the identifier of the at least one sensing function, and a sensing service corresponding to the identifier of the sensing function.

In a possible implementation, the capability information of the sensing function further includes a type of a sensing result and a corresponding sensing application programming interface that the sensing function can provide.

In a possible implementation, the first request further includes the information indicating the first sensing region requested by the application function, and the capability information of the sensing function further includes the sensing region corresponding to the sensing function.

In a possible implementation, the processing module 1302 is further configured to determine a second sensing function, where the second sensing function is determined based on the first sensing service and capability information of at least one sensing function, and a sensing service corresponding to the second sensing function includes the first sensing service. The sending module 1303 is further configured to send a third request to the second sensing function, where the third request is used to request a sensing result of the first sensing service.

In a possible implementation, the second request includes an identifier of the second sensing function.

In a possible implementation, when it is determined that the first sensing function is a network element fusing a plurality of sensing results, the identifier of the second sensing function in the second request indicates to perform fusion based on the sensing result in the second sensing function.

In a possible implementation, the second request further includes indication information indicating that the first sensing function is the network element fusing the plurality of sensing results.

In a possible implementation, when it is determined that the second sensing function is the network element fusing the plurality of sensing results, the identifier of the second sensing function in the second request indicates that the second sensing function is the network element fusing the plurality of sensing results.

In a second embodiment, the communication apparatus is used for a network exposure function.

Specifically, in a second embodiment, the receiving module 1301 is configured to receive a fourth request from an application function, where the fourth request is used to request a sensing result, and the fourth request includes information indicating a requested sensing region. The processing module 1302 is configured to determine a first sensing function and a second sensing function, where the first sensing function and the second sensing function are determined based on the requested sensing region and information about sensing regions corresponding to a plurality of sensing functions, and a sensing region corresponding to the first sensing function and a sensing region corresponding to the second sensing function cover the requested sensing region. The sending module 1303 is configured to send a fifth request to the first sensing function, where the fifth request is used to request a sensing result. The sending module 1303 is further configured to send a sixth request to the second sensing function, where the sixth request is used to request a sensing result, and the fifth request includes identifier information of the second sensing function.

In a possible implementation, when the network exposure function determines that the first sensing function is a network element fusing a plurality of sensing results, an identifier of the second sensing function in the fifth request indicates to perform fusion based on the sensing result in the second sensing function.

In a possible implementation, the fifth request further includes indication information indicating that the first sensing function is the network element fusing the plurality of sensing results.

In a possible implementation, when the network exposure function determines that the second sensing function is the network element fusing the plurality of sensing results, an identifier of the second sensing function in the fifth request indicates that the second sensing function is the network element fusing the plurality of sensing results.

In a possible implementation, the fourth request further includes information indicating a requested sensing service, the first sensing function and the second sensing function are determined based on the requested sensing region, the requested sensing service, the sensing region corresponding to the at least one sensing function, and a sensing service corresponding to at least one sensing function, and both a sensing service corresponding to the first sensing function and a sensing service corresponding to the second sensing function include the first sensing service.

In a third embodiment, the communication apparatus is used for a first sensing function, and includes: a receiving module 1301, configured to receive a request message used to request a sensing result, where the request message includes first information, and the first information indicates an identifier of a second sensing function; or the second request is from a second sensing function; and the receiving module 1301 is further configured to obtain the sensing result in response to the request message; and a sending module 1303, further configured to send the sensing result to the second sensing function.

In a possible implementation, the sending module 1303 is further configured to: obtain the sensing result from a first access network device, and send the sensing result to the second sensing function.

In a possible implementation, the first information further indicates a sensing region corresponding to the second sensing function, and the sending module 1303 is further configured to: when a sensing target moves from a sensing region corresponding to the first sensing function to a sensing region corresponding to the second sensing function, send the sensing result to the second sensing function.

In a third embodiment, the communication apparatus is used for a second sensing function, and includes: a receiving module 1301, configured to: receive a first sensing result from a first sensing function; and receive a second sensing result from an access network device; and a sending module 1303, configured to send a target sensing result to a sensing result requester, where the target sensing result is obtained based on the first sensing result and the second sensing result.

In a possible implementation, before receiving the first sensing result from the first sensing function, the sending module 1303 is further configured to request the first sensing function to send the sensing result.

In a possible implementation, the receiving module 1301 is further configured to receive indication information that is sent by a network exposure function and that indicates that the second sensing function is a network element fusing a plurality of sensing results.

FIG. 14 is a diagram of a structure of a communication apparatus according to another embodiment of this application. The apparatus shown in FIG. 14 may be configured to perform the method according to any one of the foregoing embodiments.

As shown in FIG. 14, the apparatus 1400 in this embodiment includes a memory 1401 and a processor 1402. Optionally, the apparatus 1400 further includes a communication interface 1403 and a bus 1404. The memory 1401, the processor 1402, and the communication interface 1403 are communicatively connected to each other through the bus 1404.

The memory 1401 may be a read-only memory (read-only memory, ROM), a static storage device, a dynamic storage device, or a random access memory (random access memory, RAM). The memory 1401 may store a program. When the program stored in the memory 1401 is executed by the processor 1402, the processor 1402 is configured to perform steps of the methods shown in FIG. 7 to FIG. 12B.

The processor 1402 may be a general-purpose central processing unit (central processing unit, CPU), a microprocessor, an application-specific integrated circuit (application-specific integrated circuit, ASIC), or one or more integrated circuits, and is configured to execute a related program, to implement the methods shown in FIG. 7 to FIG. 12B in this application.

The processor 1402 may alternatively be an integrated circuit chip and has a signal processing capability. In an implementation process, the steps of the methods in FIG. 7 to FIG. 12B in embodiments of this application may be completed by using an integrated logic circuit of hardware in the processor 1402 or by using instructions in a form of software.

The processor 1402 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1401. The processor 1402 reads information in the memory 1401, and completes, in combination with hardware of the processor, functions that need to be performed by units included in the apparatus in this application. For example, the processor may perform steps/functions in embodiments shown in FIG. 7 to FIG. 12B.

The communication interface 1403 may use, but not limited to, a transceiver apparatus of a transceiver type, to implement communication between the apparatus 1400 and another device or a communication network.

The bus 1404 may include a path for information transmission between various components (for example, the memory 1401, the processor 1402, and the communication interface 1403) of the apparatus 1400.

It should be understood that the apparatus 1400 shown in this embodiment of this application may be an electronic device, or may be a chip configured in an electronic device. The apparatus 1400 may be deployed in a terminal device, or may be deployed in a network device.

All or a part of the foregoing embodiments may be implemented using software, hardware, firmware, or any combination thereof. When software is used to implement embodiments, the foregoing embodiments may be implemented completely or partially in a form of computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, the part contributing to the conventional technology, or a part of the technical solutions may be implemented in a form of software product. The computer software product is stored in a storage medium, and includes several instructions for enabling a computer device (which may be a personal computer, a server, a network device, or the like) to perform all or a part of the steps of the methods described in embodiments of this application. The foregoing storage medium includes: any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a network exposure function, and comprising:
receiving a first request from an application function, wherein the first request is used to request a sensing result of a first sensing service;
determining a first sensing function, wherein the first sensing function is determined based on the first sensing service and capability information of at least one sensing function, the capability information of the sensing function comprises a sensing service corresponding to the sensing function, and a sensing service corresponding to the first sensing function comprises the first sensing service; and
sending a second request to the first sensing function, wherein the second request is used to request a sensing result of the first sensing service.

2. The method according to claim 1, wherein the method further comprises:
sending first discovery information to a network storage function, wherein the first discovery information is used to request information about the sensing function; and
receiving first response information from the network storage function, wherein the first response information indicates the capability information of the at least one sensing function.

3. The method according to claim 2, wherein the first discovery information further comprises information indicating a first sensing region requested by the application function; and
the capability information of the at least one sensing function is capability information of at least one sensing function corresponding to the first sensing region, and a sensing region corresponding to the first sensing function comprises the first sensing region.

4. The method according to claim 2 or 3, wherein the first response information comprises an identifier of the at least one sensing function.

5. The method according to claim 1, wherein determining the first sensing function comprises:
sending second discovery information to a network storage function network storage function, wherein the second discovery information is used to request to discover a sensing function, and the second discovery information comprises information indicating the first sensing service; and
receiving second response information from the network storage function, wherein the second response information indicates the first sensing function.

6. The method according to any one of claims 1 to 5, wherein determining the first sensing function based on the first sensing service and the capability information of the at least one sensing function comprises:
the first sensing function is determined based on the first sensing service, the identifier of the at least one sensing function, and a sensing service corresponding to the identifier of the sensing function.

7. The method according to any one of claims 1 to 6, wherein the capability information of the sensing function further comprises a type of a sensing result and a corresponding sensing application programming interface that the sensing function is capable of providing.

8. The method according to any one of claims 1 to 7, wherein the first request further comprises the information indicating the first sensing region requested by the application function; and
the capability information of the sensing function further comprises a sensing region corresponding to the sensing function.

9. The method according to any one of claims 1 to 8, wherein the method further comprises:
determining a second sensing function, wherein the second sensing function is determined based on the first sensing service and capability information of at least one sensing function, and a sensing service corresponding to the second sensing function comprises the first sensing service; and
sending a third request to the second sensing function, wherein the third request is used to request a sensing result of the first sensing service.

10. The method according to claim 9, wherein the second request comprises an identifier of the second sensing function.

11. The method according to claim 10, wherein when it is determined that the first sensing function is a network element fusing a plurality of sensing results, the identifier of the second sensing function in the second request indicates to perform fusion based on the sensing result in the second sensing function.

12. The method according to claim 11, wherein the second request further comprises indication information indicating that the first sensing function is the network element fusing the plurality of sensing results.

13. The method according to claim 10, wherein when it is determined that the second sensing function is the network element fusing the plurality of sensing results, the identifier of the second sensing function in the second request indicates that the second sensing function is the network element fusing the plurality of sensing results.

14. A communication method, applied to a network exposure function, and comprising:
receiving a fourth request from an application function, wherein the fourth request is used to request a sensing result, and the fourth request comprises information indicating a requested sensing region;
determining a first sensing function and a second sensing function, wherein the first sensing function and the second sensing function are determined based on the requested sensing region and information about sensing regions corresponding to a plurality of sensing functions, and a sensing region corresponding to the first sensing function and a sensing region corresponding to the second sensing function cover the requested sensing region;
sending a fifth request to the first sensing function, wherein the fifth request is used to request a sensing result; and
sending a sixth request to the second sensing function, wherein the sixth request is used to request a sensing result; and
the fifth request comprises identifier information of the second sensing function.

15. The method according to claim 14, wherein when it is determined that the first sensing function is a network element fusing a plurality of sensing results, an identifier of the second sensing function in the fifth request indicates to perform fusion based on the sensing result in the second sensing function.

16. The method according to claim 15, wherein the fifth request further comprises indication information indicating that the first sensing function is the network element fusing the plurality of sensing results.

17. The method according to claim 14, wherein when it is determined that the second sensing function is a network element fusing a plurality of sensing results, an identifier of the second sensing function in the fifth request indicates that the second sensing function is the network element fusing the plurality of sensing results.

18. The method according to any one of claims 15 to 17, wherein the fourth request further comprises information indicating a requested sensing service; and
the first sensing function and the second sensing function are determined based on the requested sensing region, the requested sensing service, a sensing region corresponding to at least one sensing function, and a sensing service corresponding to the at least one sensing function, and both a sensing service corresponding to the first sensing function and a sensing service corresponding to the second sensing function comprise the first sensing service.

19. A communication method, applied to a first sensing function, comprising:
receiving a request message used to request a sensing result, wherein the request message comprises first information, and the first information indicates an identifier of a second sensing function; or the second request is from the second sensing function;
obtaining a sensing result in response to the request message; and
sending the sensing result to the second sensing function.

20. The method according to claim 19, wherein sending the sensing result to the second sensing function comprises:
obtaining the sensing result from a first access network device, and sending the sensing result to the second sensing function.

21. The method according to claim 20, wherein the first information further indicates a sensing region corresponding to the second sensing function, and the method further comprises:
when a sensing target moves from a sensing region corresponding to the first sensing function to the sensing region corresponding to the second sensing function, sending the sensing result to the second sensing function.

22. A communication method, applied to a second sensing function, comprising:
receiving a first sensing result from a first sensing function;
receiving a second sensing result from an access network device; and
sending a target sensing result to a sensing result requester, wherein the target sensing result is obtained based on the first sensing result and the second sensing result.

23. The method according to claim 22, wherein before receiving the first sensing result from the first sensing function, the method further comprises:
requesting the first sensing function to send the sensing result.

24. The method according to claim 22 or 23, wherein the method further comprises:
receiving indication information that is sent by a network exposure function and that indicates that the second sensing function is a network element fusing a plurality of sensing results.

25. A communication apparatus, comprising a processor; and
the processor is configured to execute a computer program, and/or enable, by using a logic circuit, the communication apparatus to implement the method according to any one of claims 1 to 13, 14 to 18, 19 to 21, or 22 to 24.

26. A communication system, comprising the communication apparatus according to claim 25.

27. A computer-readable medium, wherein the computer-readable medium stores program code to be executed by a computer, and the program code comprises instructions used for performing the method according to any one of claims 1 to 13, 14 to 18, 19 to 21, or 22 to 24.

28. A computer program product, wherein the computer program product comprises computer program code, and when the computer program code is run on a computer, the computer is enabled to perform the method according to any one of claims 1 to 13, 14 to 18, 19 to 21, or 22 to 24.

29. A chip, comprising at least one processor and a communication interface, wherein the communication interface and the at least one processor are interconnected through a line, and the at least one processor is configured to run a computer program or instructions, to perform the communication method according to any one of claims 1 to 13, 14 to 18, 19 to 21, or 22 to 24.
